(19) Europäisches Patentamt
European Patent Office
Office européen des brevets

(11) **EP 4 213 398 A2**

(12) **EUROPEAN PATENT APPLICATION**

(43) Date of publication:
**19.07.2023  Bulletin 2023/29**

(21) Application number: **23150866.4**

(22) Date of filing: **10.01.2023**

(51) International Patent Classification (IPC):
**H04B 7/024** (2017.01)   **H04B 7/0408** (2017.01)
**H04B 7/0456** (2017.01)   **H04B 7/06** (2006.01)

(52) Cooperative Patent Classification (CPC):
**H04B 7/024; H04B 7/0408; H04B 7/0456;
H04B 7/0695**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **14.01.2022  US 202263299789 P
05.05.2022  US 202263338609 P
19.09.2022  US 202263407856 P
25.10.2022  US 202263419246 P
20.12.2022  US 202218085250**

(71) Applicant: **Samsung Electronics Co., Ltd.
Gyeonggi-do 16677 (KR)**

(72) Inventors:
• **SHAHMOHAMMADIAN, Hoda
San Jose, CA 95134 (US)**
• **BAE, Jung Hyun
San Jose, CA 95134 (US)**

(74) Representative: **Kuhnen & Wacker
Patent- und Rechtsanwaltsbüro PartG mbB
Prinz-Ludwig-Straße 40A
85354 Freising (DE)**

(54) **CHANNEL STATE INFORMATION ACQUISITION ENHANCEMENT FOR COHERENT JOINT TRANSMISSION**

(57)    Disclosed is a method including enabling, for channel state information (CSI) acquisition by a user equipment (UE) in multiple transmission/reception point (TRP) coherent joint transmission (CJT), different beam selections in each panel of a type 1 multiple panel codebook, and applying multiple input multiple output (MIMO) precoding to the multiple panels.

EP 4 213 398 A2

300

FIG. 3

**Description**

**TECHNICAL FIELD**

The disclosure relates generally to wireless communication systems, and more particularly, to improvements to the channel state information (CSI) acquisition for coherent joint transmission (CJT) in wireless communication systems.

**RELATED ART**

In the third generation partnership project (3GPP) framework, joint transmission (JT) may be categorized into CJT and non-coherent JT (NCJT).

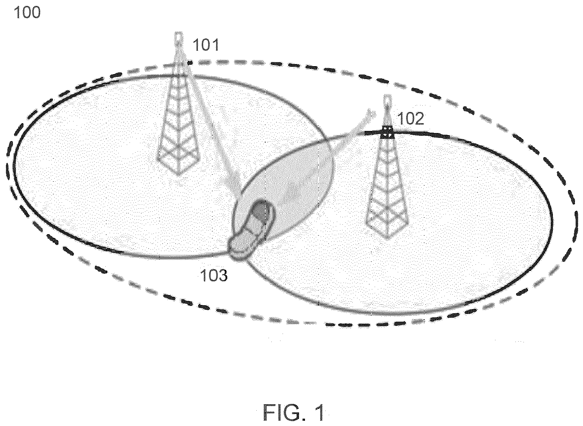

FIG. 1 illustrates an example of a CJT scheme 100, according to the prior art. In FIG. 1, the CJT is based on the assumption that a base station or gNode B (gNB) in the cooperation set of a first (TRP) 101 and a second TRP 102 has detailed CSI of the serving links from all cooperating TRPs to the same user equipment (UE) 103. In this manner, each of the TRPs 101 and 102 in the cooperation set may jointly transmit the same message to the UE 103 on the same time and frequency resources. The transmitted signals from different TRPs may be jointly precoded with prior information indicating phase synchronization across TRPs to achieve coherent combining at the served UE 103.

With employment of a centralized radio access network (C-RAN) architecture in real networks, the demand for CJT multi-TRP transmission has increased, thereby requiring some enhancement of the current fifth generation (5G) codebook design and CSI reporting framework to increase the feasibility of joint precoding among the TRPs in a cooperation set.

CSI measurement and reporting for CJT multiple TRP (mTRP) targeting frequency division duplexing (FDD)

In practical CJT deployments, a gNB should be able to dynamically switch between CJT and single TRP transmission depending on traffic conditions and channel quality. This may include independent CSI measurement and reporting for each TRP as well as a joint CSI measurement and reporting for CJT multi-TRP transmission. Following current CSI measurement and reporting framework where CSI configuration and triggering for different TRPs are independent, CJT multi-TRP transmission may require three transmission hypotheses, where hypothesis 1 is a single TRP transmission with TRP1, hypothesis 2 is a single TRP transmission with TRP2, and hypothesis 3 is CJT of both TRP1 and TRP2.

The number of CSI reports in a bandwidth part (BWP) may be limited by UE capability that is up to 4 per time-domain behavior. CSI measurement and reporting of CJT transmission based on a current specification would consume a significant amount of UE capabilities for CSI, even for a two-TRP scenario. A CSI reporting delay is also significantly large due to the multiple measurement and reporting events. Therefore, a need in the art persists to avoid large signaling overhead and UE complexity.

In 3GPP release 17 (Rel. 17), dynamic channel/interference hypotheses CSI measurement and reporting were discussed and introduced for NCJT transmissions. For CSI enhancement for NCJT multi-TRP transmission, a total of three dynamic hypotheses were considered (i.e. two corresponding to single TRP transmissions and one corresponding to NCJT multi-TRP transmission) while CSI reporting associated with these measurement hypotheses may be configured by a single CSI reporting setting. For a CSI measurement associated to this single reporting setting, a UE may be configured with one CSI-RS resource set including $K_s \geq 2$ nonzero part (NZP) CSI-resource setting resources as channel measurement resources (CMR) for the single TRP measurement hypotheses and $N \geq 1$ NZP CSI-RS resource pairs (where each pair may be used as one CMR) for an NCJT measurement hypothesis. All CMR resources in the set may have the same number of ports and association of different TRPs (i.e. transmission control information (TCI) states) to these CMRs may be handled at the resource level. To do so, a UE may be configured with two CMR groups corresponding to two TRPs, where $K_s = K_1 + K_2$, $K_1$ and $K_2$ are the number of CMRs in first and second groups, respectively. CMR pairs for NCJT measurement hypothesis may be determined by selection of one resource per CMR group. In NCJT multi-TRP transmission, one possible option for CSI reporting is that the UE may be configured to report $X = 0, 1, 2$ CSIs associated with the single-TRP measurement hypotheses and one CSI associated with an NCJT measurement hypothesis. If $X = 1$, one CSI may be associated with the best single-TRP measurement, and if $X = 2$, two CSIs may be associated with two different single-TRP measurements. That is, there are two single TRP measurmenets assciciated to a CSI-RS measurement transmitted from one specific TRP in an NCJT transmission with two TRPs. The best measured CSI among these two is chosen and reported when $X=1$.

Alternatively, a UE can be configured to report only one CSI associated with the best one among NCJT and single-TRP measurement hypotheses. That is, there are three total CSI measurements, one NCJT transmission (two TRP transmit CSI-RS signals) and two single TRP transmissions, one of which transmits the CSI-RS signal. The best measured CSI among these three CSI measurements is chosen and reported. For the NCJT measurement hypothesis, a UE may be expected to report two rank indicators (RIs), two precoding matrix indicators (PMIs), two lawful intercepts (Lis) and one channel quality indicator (CQI) per codeword, for single-DCI based NCJT when the maximal transmission layers are less than or equal to four.

With employment of C-RAN architecture in real networks and faced with rapid increasing demand for CJT multi-TRP transmission, some additional enhancements of CSI measurement and reporting framework may be required for CJT multi-TRP transmissions. Following the same approach as in Rel. 17 CSI enhancement for NCJT, CSI reporting overhead in CJT multi-TRP transmission can be addressed by associating CSI reporting of the three measurement hypotheses of CJT multi-TRP transmission with a single CSI reporting setting. For a CSI measurement associated to this single reporting setting, a UE can be configured with one CSI-RS resource set including $K_s \geq 2$ NZP CSI-RS resources as CMRs for the single TRP measurement hypotheses and $N \geq 1$ NZP CSI-RS resource pairs as CMRs for the CJT measurement hypothesis. All CMR resources in the set may have the same number of ports and association of different TCI states to these CMRs may be performed at the resource level. To do so, a UE may be configured with two CMR groups corresponding to two TRPs, where $K_s = K_1 + K_2$, $K_1$ and $K_2$ are the number of CMRs in first and second groups, respectively. CMR pairs for the CJT measurement hypothesis may be determined by selection of one resource per CMR group. Based on gNB configuration and UE capability, the two single TRP CMR transmissions may be used for both measurements of the single TRP hypotheses as well as the CJT hypothesis.

Another approach may be that a UE may be configured with one CSI-RS resource set including $K_s \geq 2$ NZP CSI-RS resources each with one port group as CMRs for the single TRP measurement hypothesis and $N \geq 1$ pairs of NZP CSI-RS resources for the CJT measurement hypothesis. A UE may be configured with two port groups corresponding to two TRPs, where $K_1$ and $K_2$ are the number of CMRs in first and second port groups, respectively, and $K_s = K_1 + K_2$. Association of different TCI states to these CMRs may be performed at the port group level where each port group is associated with one distinct TRP/TCI state. The CMR pairs for the CJT measurement hypothesis may be determined by selection of one resource per port group whereas each pair can be used as one CMR for the CJT measurement hypothesis. In this scheme, based on a gNB configuration and UE capability, the two single TRP CMR transmissions may be used for both measurements of the single TRP hypotheses as well as the CJT hypothesis.

Another alternative is that a single CSI reporting setting may be configured with two NZP CSI-RS resources resource sets. The first set may correspond to the single TRP measurement hypotheses and the second set may correspond to the CJT multi-TRP measurement hypothesis. The first resource set may include a total of $K_s$ NZP CSI-RS resources, each with one TCI state corresponding to a single TRP transmission. The second resource set may include a total of $N$ NZP CSI-RS resources corresponding to CJT transmission from both TRPs where each CMR resource is configured with two TCI states. It is noted that the number of ports of resources in the second set may be two times the number of ports of resources in the first set. In one gNB implementation, a CMR in the second set may be seen as the concatenation of two resources of the first set with different TCI states such that the same measurements of the single TRP transmission hypotheses would be allowed to be used for the CJT measurement hypothesis. The association of TCI states to the resources in the second set can be handled based on a definition of resource/port groups (i.e. in a concatenated version) or in general in a port-wise manner.

For a CJT measurement hypothesis, a UE may be expected to report one RI, one PMI, one LI and one CQI per codeword. In this case, the PMI selection for the CJT hypothesis would be based on a multi-panel codebook design requiring an enhancement of the current 5G codebook design framework to enable joint precoding among the TRPs in a cooperation set. Specifically, in 5G new radio (NR), the two types of codebooks having been specified are Type I and Type II. The Type I multi panel codebook design in the current specification can support CJT multi-TRP transmission and one PMI reporting in the CJT measurement hypothesis. However, this multi-panel codebook design is based on an assumption that different panels are quasi co-located and experience similar long term channel characteristics. This assumption is inapplicable to, and therefore, unrealistic for distributed multiple input multiple output (MIMO) scenarios. Moreover, the current Type II codebook design does not address multi-panel and multi-TRP transmission scenarios.

As such, there is a need in the art for an update to the codebook designs to increase the feasibility of joint precoding among the TRPs in a cooperation set.

## SUMMARY

The present disclosure has been made to address at least the above-mentioned problems and/or disadvantages and to provide at least the advantages described below.

Accordingly, an aspect of the present disclosure is to provide an enhancement for NCJT to the current 5G specification Rel. 17 regarding the CSI measurement and reporting framework.

Another aspect of the present disclosure is to provide an improved codebook design which is suitable for the distributed MIMO scenario and addresses the multi-panel and multi-TRP scenarios to increase the feasibility of joint precoding among the TRPs, thus improving on the previous codebook design.

In accordance with an aspect of the disclosure, a method includes enabling, for CSI acquisition by a UE in multiple TRP CJT, different beam selections in each panel of a type 1 multiple panel codebook, and applying MIMO precoding to each of the multiple panels.

In accordance with another aspect of the disclosure, a UE includes at least one processor, and at least one memory operatively connected with the at least one processor, the at least one memory storing instructions, which when executed, instruct the at least one processor to perform a method by enabling, for CSI acquisition by a LTE in multiple TRP CJT, different beam selections in each panel of a type 1 multiple panel codebook, and applying MIMO precoding to each of the multiple panels.

In accordance with another aspect of the disclosure, a method includes enabling, for CSI acquisition by a UE in multiple TRP CJT, different beam selections in each panel of a type II multiple panel codebook, applying inter-panel co-phasing, and/or applying different amplitude and phase shift coefficients to each of the multiple panels, and performing the beam selections by selecting a set of beam groups based on a use of same beams for different polarization transmissions and transmission layers.

In accordance with another aspect of the disclosure, a UE includes at least one processor, and at least one memory operatively connected with the at least one processor, the at least one memory storing instructions, which when executed, instruct the at least one processor to perform a method by enabling, for CSI acquisition by a UE in multiple TRP CJT, different beam selections in each panel of a type II multiple panel codebook, applying inter-panel co-phasing, and/or applying different amplitude and phase shift coefficients to selected beams in each of the multiple panels, and performing the beam selections by selecting a set of beam groups based on a use of same beams for different polarization transmissions and transmission layers.

## BRIEF DESCRIPTION OF THE DRAWINGS

The above and other aspects, features, and advantages of certain embodiments of the present disclosure will be more apparent from the following detailed description taken in conjunction with the accompanying drawings, in which:

FIG. 1 illustrates an example of a CJT scheme 100, according to the prior art;
FIG. 2 illustrates the indication of beams for each of two channels, according to the prior art;
FIG. 3 illustrates the indication of beams for each of two channels, according to an embodiment; and
FIG. 4 is a block diagram of an electronic device in a network environment, according to an embodiment.

## DETAILED DESCRIPTION

Embodiments of the disclosure will be described herein below with reference to the accompanying drawings. However, the embodiments of the disclosure are not limited to the specific embodiments and should be construed as including all modifications, changes, equivalent devices and methods, and/or alternative embodiments of the present disclosure. Descriptions of well-known functions and/or configurations will be omitted for the sake of clarity and conciseness.

The expressions "have," "may have," "include," and "may include" as used herein indicate the presence of corresponding features, such as numerical values, functions, operations, or parts, and do not preclude the presence of additional features. The expressions "A or B," "at least one of A or/and B," or "one or more of A or/and B" as used herein include all possible combinations of items enumerated with them. For example, "A or B," "at least one of A and B," or "at least one of A or B" indicate (1) including at least one A, (2) including at least one B, or (3) including both at least one A and at least one B.

Terms such as "first" and "second" as used herein may modify various elements irrespective of an order and/or importance of the corresponding elements, and do not limit the corresponding elements. These terms may be used for the purpose of distinguishing one element from another element. For example, a first user device and a second user device may indicate different user devices irrespective of the order or importance. A first element may be referred to as a second element without departing from the scope the disclosure, and similarly, a second element may be referred to as a first element.

When a first element is "operatively or communicatively coupled with/to" or "connected to" another element, such as a second element, the first element may be directly coupled with/to the second element, and there may be an intervening element, such as a third element, between the first and second elements. To the contrary, when the first element is "directly coupled with/to" or "directly connected to" the second element, there is no intervening third element between the first and second elements.

All of the terms used herein including technical or scientific terms have the same meanings as those generally understood by an ordinary skilled person in the related art unless they are defined otherwise. The terms defined in a generally used dictionary should be interpreted as having the same or similar meanings as the contextual meanings of the relevant technology and should not be interpreted as having ideal or exaggerated meanings unless they are clearly defined herein. According to circumstances, even the terms defined in this disclosure should not be interpreted as excluding the embodiments of the disclosure.

The following discloses refinement of the codebook design framework targeting one PMI reporting in hypothesis 3 of the CJT multi-TRP transmission.

In this scheme, CSI reporting can follow the same approach as introduced for NCJT multi-TRP transmission in Rel. 17. That is, one CSI reporting triggering state would trigger $X + 1$ CSIs, where $X = 0, 1, 2$ CSIs are associated with the single-TRP measurement hypotheses and one CSI is associated with the CJT measurement hypothesis. If $X = 1$, one CSI may be associated with the best single-TRP measurement, and if $X = 2$, two CSIs may be associated with two different single-TRP measurements. A UE can be alternatively configured to report one CSI associated with the best one among CJT and single-TRP measurement hypotheses. In such a case, CSI can implicitly identify whether a reported CSI corresponds to a single-TRP CSI hypothesis or a CJT CSI hypothesis. The bitwidth associated to $X + 1$ CSI reports may be given as $Ceil(log_2 N)$ for $X = 0$, $Ceil(log_2 N) + Ceil(log_2 K_s)$ for $X = 1$, and $Ceil(log_2 N) + Ceil(log_2 K_1) + Ceil(log_2 K_2)$ for $X = 2$.

Further disclosed herein is dynamic updating of TCI states of port groups in CMRs and/or CMR resources of the CJT measurement hypothesis through a MAC-CE or DCI indication.

RAN 1 has agreed to support CJT multi TRP transmission with up to four TRPs/TRP groups with equal priority. The CJT measurement hypothesis would, however, be based on N cooperating TRPs/TRP groups where the value of N can be selected and reported by the UE. This requires the introduction of a new UE capability that indicates how many CSIs can be calculated by a UE corresponding to different CJT transmission hypotheses with a different number of cooperating TRPs/TRP groups assumptions. In such a case, to provide the best channel quality, a UE would calculate multiple CSIs for all/some different possible CJT measurement hypothesis and select the value of N based on the best CJT hypothesis and report the corresponding CSI to a gNB. Such a UE capability may be based on n CSIs, where $n \in [1, 2, ..., n_{max}]$. The maximum value for n can be derived with assumption of a maximum total of M TRPs in CJT, as

$$\max(n) = n_{max} = \binom{M}{2} + \cdots + \binom{M}{M}$$

, if not including a single TRP hypothesis, and as

$$\max(n) = n_{max} = \binom{M}{1} + \cdots + \binom{M}{M}$$

, if including the single TRP hypothesis. With a total of M = 4 TRPs in CJT, as agreed upon in RAN1, the maximum value for n is

$$n_{max} = \binom{4}{2} + \binom{4}{3} + \binom{4}{4} = 11$$

, if not including the single TRP hypothesis, and as

$$n_{max} = \binom{4}{1} + \binom{4}{2} + \binom{4}{3} + \binom{4}{4} = 15$$

, if including the single TRP hypothesis.

Codebook design refinement for CJT mTRP_targeting FDD

The Type I codebook design is founded based on a long term evolution (LTE) codebook design to support a single user MIMO for both high and low order transmissions. The Type II codebook is, however, designed based on a specific mathematic approach to provide more accurate information on channel characteristics using more sophisticated precoding matrices to support a multi-user MIMO with up to two layers of transmission. Both Type I and Type II codebooks are constructed based on 2- dimensional (2D) discrete Fourier transform (DFT) based beams and PMI reporting of information on beam selection and co-phase combining between two polarizations. The Type II codebook additionally reports the information on wide-band and sub-band amplitude coefficients of the selected beams.

Specifically, all radiating antenna elements are associated with an electric and magnetic field in each location around the antenna. The electric field at any point can be represented as a vector represented in two dimensions by projecting it along the spherical unit vectors $\hat{\phi}$ and $\hat{\theta}$. The electric field of an antenna in a given direction ($\phi$, $\theta$) in far-field should be fully represented as the two dimensional vector, $\boldsymbol{F}(\phi, \theta) = [F_\phi(\phi,\theta)\ F_\theta(\phi,\theta)]^T$ which is referred to as the polarization vector. $F_\phi$ and $F_\theta$ are field components in the direction $\hat{\phi}$ and $\hat{\theta}$. The real-valued instantaneous field in RF frequency can thus be simply written as

$$\vec{E}(t,\phi,\theta) = \hat{\phi}\,|F_\phi(\phi,\theta)|\cos\left(\omega t + kr + \angle F_\phi(\phi,\theta)\right) + \hat{\theta}\,|F_\theta(\phi,\theta)|\cos\left(\omega t + kr + \angle F_\theta(\phi,\theta)\right)$$

where $\omega$ represents the transmission frequency in hertz (Hz) and $kr$ contributes as a constant phase offset as a function of distance.

In the Type I codebook, PMI reporting occurs in 2 stages. In stage 1, wideband information including beam selection, or beam group selection is reported, and in stage 2, sub-band information including beam selection from within a group and phase shift selection for co-phasing between polarizations, layers and antenna panels is reported. The Type I codebook design provides two solutions of single panel and multi panel designs where each supports a Mode 1 and Mode 2 of reporting operation. The Type II codebook design, however, is based on reporting the information of a beam selection set and then a set of amplitude and phase shift coefficients to generate a linearly weighted combination of those selected beams. The Type II codebook design provides two solutions of single panel and port selection designs. The Type II single panel solution relies on a hypothetical beam position using oversampling factors while the Type II port selection solution is based on a set of actual beamformed CSI-RS transmissions.

Type I Multi-Panel Codebook refinement for CJT mTRP targeting FDD

In the Type I codebook, PMI reporting has dual stages of wideband and sub-band CSI reporting. In stage 1, long term channel characteristics such as beam selection or beam group selection is reported. In stage 2, short-term and frequency selective channel characteristics such as beam selection from within a group and phase shift selection for co-phasing between polarizations, layers and antenna panels is reported.

Currently, precoding matrices are defined based on a specific antenna configuration assumption at a gNB. These antenna configurations are specified by defining the number of cross polar antenna elements in each panel where $N_1$ is the number of cross polar antenna element columns and $N_2$ is the number of cross polar antenna element rows. The number of CSI-RS ports is derived by $2N_1N_2$. With a definition of DFT oversampling for higher granularity for beam sweeping where O1 and O2 are oversampling factors in columns and rows, the number of candidate beams in the horizontal direction is defined as $N_1O_1$ and number of candidate beams in the vertical direction is defined as $N_2O_2$. Note that $O_2$ is set to one when $N_2 = 1$ (i.e., no beamforming in the vertical direction).

The Type I codebook design provides two solutions of single panel and multi panel designs, where each supports Mode 1 and Mode 2 of reporting operation. The operation mode is configured by radio resource control (RRC) parameter *codebookMode* to instruct a UE to apply a specific mode. In the Mode 1 operation for the Type I single panel codebook, the UE reports a specific beam selected from all candidate beams at stage 1 and a specific phase shift for cross polarized port groups at stage 2. The available values for phase shift of cross polarized port groups to select at stage 2 are [0,90,180,270] for a single layer and [0,90] for two layers with the same conceptual operation as a MIMO precoding for a two-port transmission scenario. In the Mode 2 operation for the Type I single panel codebook, the UE reports beam group selection at stage 1 and selection of a specific beam within the chosen beam group and a specific phase shift for cross polarized port groups at stage 2.

The *i* parameters are used by the UE to report channel state information to the gNB, where $i_{1,1}$ indicates beam selection in the horizontal direction, $i_{1,2}$ indicates beam selection in the vertical direction, $i_{1,3}$ indicates a beam offset of multiple layers and $i_2$ indicates sub-band properties at stage 2 reporting. The beam offset uses values of multiple oversampling factors in either the horizontal and/or vertical direction to create spatial separation and relies on reflection and scattering.

The Type I multi panel codebook design supports configuration of either 2 or 4 antenna panels where the antenna elements configuration per panel is similarly defined as in the Type I single panel codebook. That is, the number of cross polar antenna element columns per panel is $N_1$, the number of cross polar antenna element rows per panel is $N_2$, and O1 and O2 are oversampling factors in columns and rows per panel. With $N_g$ antenna panels, the number of CSI ports is derived as $2N_gN_1N_2$, but the number of candidate beams are $N_1O_1N_2O_2$, meaning that the same beam is used for other polarizations and the other panels.

In the Mode 1 operation for the Type I multi panel codebook, the LTE reports beam selection and wideband phase shift(s) for inter-panel co-phasing at stage 1 and one phase shift for sub-band inter-polarization co-phasing at stage 2. Mode 1 operation for the Type I multi panel codebook supports configuration of $N_g = 2$ or $N_g = 4$ antenna panels where for $N_g = 2$ panels, one phase shift for inter-panel co-phasing is reported and for $N_g = 4$ panels, three phase shifts are reported.

In the Mode 2 operation for the Type I multi panel codebook, the LTE reports beam selection and two phase shifts for a combination of inter-panel and inter-polarization co-phasing at stage 1 and three phase shifts per sub-band combination of inter-panel and inter-polarization co-phasing at stage 2. Mode 2 operation for the Type I multi panel codebook supports the configuration of $N_g = 2$ antenna panels.

The Type I multi panel codebook design, $i_{1,1}$ indicates beam selection in the horizontal direction, $i_{1,2}$ indicates beam selection in the vertical direction, $i_{1,3}$ indicates beam offset of multiple layers, $i_{1,4}$ is inter-panel co-phasing for Mode 1 while wideband combined inter-panel and inter-polarization co-phasing for Mode 2, and $i_2$ is sub-band combined inter-panel and inter-polarization co-phasing at stage 2 reporting.

The generation of precoding matrix for the Type I codebook is based on composition of beamforming (wideband precoder) and MIMO precoding (sub-band precoder) matrices where cross polarized port groups and multiple panels are assumed to share the same beam and beamforming virtualization coefficients. The inter-panel and inter-polarization co-phasing are included in MIMO precoding that reflects the short-term frequency selective channel information. In the current specification, the precoding matrix is defined in Equation (1) as follows.

$$W = W_1 W_2$$

$$.....(1)$$

where $W_1$ is the wideband beamforming precoder matrix and $W_2$ is the sub-band precoder matrix that are derived as follows. In the Type I single panel codebook design, the wideband beamforming precoder $W_1$ is defined in Equation (2) as follows.

$$W_1 = \begin{bmatrix} v_{l,m} & 0 \\ 0 & v_{l,m} \end{bmatrix}$$

$$.....(2)$$

where $v_{l,m}$ are 2D DFT virtualization coefficients derived as $v_{l,m} = x_l \otimes u_m$ in Equations (3) and (4) as follows.

$$x_l = \begin{bmatrix} 1 & e^{\frac{j2\pi l}{N_1 O_1}} & ... & e^{\frac{j2\pi(N_1-1)l}{N_1 O_1}} \end{bmatrix}$$

$$.....(3)$$

$$u_m = \begin{bmatrix} 1 & e^{\frac{j2\pi m}{N_2 O_2}} & ... & e^{\frac{j2\pi(N_2-1)m}{N_2 O_2}} \end{bmatrix}$$

$$.....(4)$$

and sub-band precoder matrix $W_2$ is defined in Equation (5) as follows.

$$W_2 = \frac{1}{\sqrt{P}} \begin{bmatrix} 1 \\ \varphi_n \end{bmatrix} \text{ or } \frac{1}{\sqrt{2P}} \begin{bmatrix} 1 & 1 \\ \varphi_n & -\varphi_n \end{bmatrix}$$

$$.....(5)$$

for a rank-1 or a rank-2 transmission where $\varphi_n$ is the inter-polarization co-phasing.

In the Type I multi-panel codebook design, the wideband beamforming precoder matrix $W_1$ (for a two-panel scenario) is defined in Equation (6) as follows.

$$W_1 = \begin{bmatrix} \begin{bmatrix} v_{l,m} & 0 \\ 0 & v_{l,m} \end{bmatrix} & 0 \\ 0 & \begin{bmatrix} v_{l,m} & 0 \\ 0 & v_{l,m} \end{bmatrix} \end{bmatrix}$$

$$.....(6)$$

Sub-band precoder matrix $W_2$ design considers inter-panel co-phasing (i.e., $\varphi_p$) in addition to inter-polarization co-phasing (i.e. $\varphi_n$) as defined below in Equation (7) for a rank-1 or a rank-2 transmission.

$$W_2 = \frac{1}{\sqrt{P_{CSI-RS}}} \begin{bmatrix} 1 \\ \varphi_n \\ \varphi_p \\ \varphi_n\varphi_p \end{bmatrix} \text{ or } \frac{1}{\sqrt{2P_{CSI-RS}}} \begin{bmatrix} 1 & 1 \\ \varphi_n & -\varphi_n \\ \varphi_p & \varphi_p \\ \varphi_n\varphi_p & -\varphi_n\varphi_p \end{bmatrix}$$

$$.....(7)$$

In the above codebook design, the priority of the precoder matrix design is to first consider cross polarization transmission and to then consider multi-beam transmission.

Further, there is a special design case in the current Type I single panel codebook design for rank-3 and rank-4 transmissions when antenna configuration can support more than 16 CSI-RS signals. In this case, antenna elements in the panel are divided into groups and a single beam is selected to be reused for transmission by each group of antenna elements with a different phase shift (i.e. $\theta_p$) to provide differentiation. For a rank-3 transmission, the precoder matrix is defined in Equation (8) as follows.

$$W = \frac{1}{\sqrt{3P_{CSI-RS}}} \begin{bmatrix} v_{l,m} & v_{l,m} & v_{l,m} \\ \theta_p v_{l,m} & -\theta_p v_{l,m} & \theta_p v_{l,m} \\ \varphi_n v_{l,m} & \varphi_n v_{l,m} & -\varphi_n v_{l,m} \\ \varphi_n\theta_p v_{l,m} & -\varphi_n\theta_p v_{l,m} & -\varphi_n\theta_p v_{l,m} \end{bmatrix}$$

$$.....(8)$$

For rank-4 transmission, the precoder matrix is defined in Equation (9) as follows.

$$W = \frac{1}{\sqrt{4P_{CSI-RS}}} \begin{bmatrix} v_{l,m} & v_{l,m} & v_{l,m} & v_{l,m} \\ \theta_p v_{l,m} & -\theta_p v_{l,m} & \theta_p v_{l,m} & -\theta_p v_{l,m} \\ \varphi_n v_{l,m} & \varphi_n v_{l,m} & -\varphi_n v_{l,m} & -\varphi_n v_{l,m} \\ \varphi_n\theta_p v_{l,m} & -\varphi_n\theta_p v_{l,m} & -\varphi_n\theta_p v_{l,m} & \varphi_n\theta_p v_{l,m} \end{bmatrix}$$

$$.....(9)$$

For the Type I codebook to address the CJT scenario, the current Type I multi-panel codebook design is based on an assumption that different panels are quasi co-located and experience similar long term channel characteristics that mainly involve wideband PMI information such as beam or beam group selection. As previously discussed, when there are $N_g$ multiple panels (each with $N_1 N_2$ ports), the number of beams available for selection is given by $N_1 O_1 N_2 O_2$ and not by $N_g N_1 O_1 N_2 O_2$, indicating that the same selected beam is reused for transmission from $N_g$ panels. This assumption is inapplicable to, and thus, unrealistic for a distributed MIMO scenario in which multiple TRPs are not quasi co-located and each TRP may experience different long term channel characteristics requiring different beam/beam group selections per panel. That is, a different beam/beam group can be selected for each group of $N_1 N_2$ antenna elements (i.e., each panel).

In this case, the present disclosure enables multiple beam selections at a first stage of PMI reporting for different panels. This can be performed by a separate indication of beams per panel using separate $i$ parameters. As an example of such a scheme for a two-layer transmission over a two- panel multi-TRP scenario, the first stage of PMI reporting involves additionally introducing $i_{1,k1}$, $i_{1,k2}$ values for identification of the second panel beams or group of beams in the horizontal and vertical directions, respectively. These $i_{1,k1}$, $i_{1,k2}$ parameters can be any suitable values as long as their corresponding beams are spatially separated to rely on reflection and scattering.

Alternatively, and to reduce signaling overhead, the first stage of PMI reporting involves additionally introducing sets of $i_{1,k}$ parameters for identification of the beams of other panels or group of beams in a similar approach as in the current specification. That is, the first layer beam in a panel is identified by its location in the horizontal and vertical directions while beams selected for other layers in that panel are identified by defining their offsets with respect to the first layer beam in that panel. For a two-layer transmission over the two panel multi-TRP scenario, $i_{1,1}$ and $i_{1,2}$ identify the first layer beam in the horizontal and vertical directions, $i_{1,3}$ identifies an offset between the beams selected for each layer in the first panel as in the current specification, and then additionally introduced parameters $i_{1,4}$, $i_{1,5}$ specify the second panel's first layer beam in the horizontal and vertical directions, and $i_{1,6}$ specifies a beam selected for other layer in the second panel with same approach as in the current specification by defining offset between the beams selected for each layer in the second panel. As previously discussed, beam offset only takes values of multiple oversampling factors in either the horizontal and/or vertical direction to create spatial separation to rely on reflection and scattering. This decreases the PMI signaling overhead by limiting the available position of selected beams or group of beams.

Alternatively, the first beam/beam group is indicated for the first layer of the first panel and beams of other panels are indicated using offset values from that first selected beam/beam group. The offset can be a multiple of oversampling factors in the horizontal or/and vertical directions. Since beam offset only takes values of multiple oversampling factors in either horizontal and/or vertical direction to create spatial separation and relies on reflection and scattering, the available positions of panels of the other beams are restricted with respect to the position of the first layer beam at the first panel. This significantly reduces signaling overhead but may degrade the overall performance depending on the environment. The offset may be zero, demoting this design to the current Type I multi-panel codebook design that all panels use the same beams/group of beams.

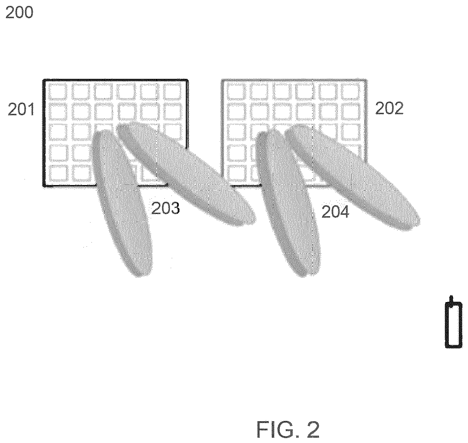

FIG. 2 illustrates the indication of beams for each of two channels, according to the prior art. In FIG. 2, relating to the current specification, one reported beam can support up to rank two per panel (i.e. one cross polar beam per panel), and identical beam configurations 203, 204 are included per panel 201, 202, respectively.

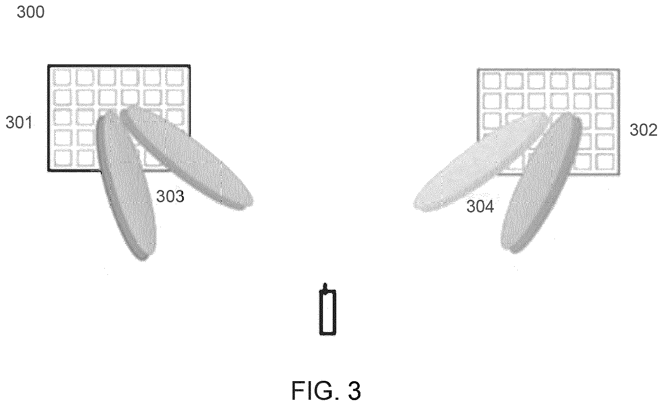

FIG. 3 illustrates the indication of beams for each of two channels, according to an embodiment. In FIG. 3, different beam configurations 303, 304 are included in the panels 301, 302. The embodiment shown in FIG. 3 is more practical for frequency range 2 (FR2) applications.

Specifically, in a scheme for a two-layer transmission over a two panel multi-TRP scenario, the first stage of PMI reporting involves additionally introducing $i_{1,k}$ for identification of the second panel beams or group of beams. That is, the first stage of PMI reporting provides values for $i_{1,1}$ and $i_{1,2}$ that identify the first layer beam or group of beams in the horizontal and vertical directions, a value for $i_{1,3}$ that identifies an offset between the beams selected for each layer in the first panel, values for $i_{1,4}$, and $i_{1,5}$ that specify offsets between the beams selected for the first layer in the first panel and the beam of the first layer and the beam of the second layer in the second panel.

The current Type I multi-panel codebook design as illustrated in FIG. 2 considers reporting inter-panel co-phasing values (i.e., $\varphi_p$) in addition to inter-polarization co-phasing (i.e. $\varphi_n$) while inter-panel co-phasing is only used for coherent transmission of the same data from different panels. Similar to cross polarized transmission, the present disclosure introduces the use of MIMO precoding on different panels to provide short term frequency selective information of channel characteristics over different panels. To illustrate, in the current Type I multi panel codebook design, inter-panel co-phasing information is only used to achieve coherent combining of the same transmitted data from different panels at the UE.

With the introduction of MIMO precoding on panels, the number of required beams can be decreased for transmission of a specific rank compared to the current Type I multi-panel codebook illustrated in FIG. 2. That is, each beam can now be used to provide up to a rank-2K transmission with K panels. In contrast to the NCJT scenario, embodiments of the disclosure achieve jointly precoded transmission with decreased CSI reporting overhead, particularly for high mobility scenarios where UE velocity combined with panels incoherency generates faster channel variations. In the high mobility NCJT scenario, the channel would rapidly change and more frequent NCJT CSI acquisition would be required, resulting in a rapid change of precoding matrices at each TRP. Thus, for a rank-R transmission with Mode 1, Equation (10) is derived as follows.

$$W^{(R)}_{l,l',..l'''',m,m',...,m'''',p,n}$$

$$= \begin{cases} \frac{1}{\sqrt{RP_{CSI-RS}}} \begin{bmatrix} \begin{bmatrix} \begin{bmatrix} v_{l,m} & 0 \\ 0 & v_{l,m} \end{bmatrix} & 0 \\ 0 & \begin{bmatrix} v_{l,m} & 0 \\ 0 & v_{l,m} \end{bmatrix} \end{bmatrix} & & 0 \\ & \ddots & \\ 0 & & \begin{bmatrix} \begin{bmatrix} v_{l'''',m''''} & 0 \\ 0 & v_{l'''',m''''} \end{bmatrix} & 0 \\ 0 & \begin{bmatrix} v_{l'''',m''''} & 0 \\ 0 & v_{l'''',m''''} \end{bmatrix} \end{bmatrix} \end{bmatrix} C_{MIMO} & if\ mod(R,4) = 0 \\[4em] \frac{1}{\sqrt{RP_{CSI-RS}}} \begin{bmatrix} \begin{bmatrix} \begin{bmatrix} v_{l,m} & 0 \\ 0 & v_{l,m} \end{bmatrix} & 0 \\ 0 & \begin{bmatrix} v_{l,m} & 0 \\ 0 & v_{l,m} \end{bmatrix} \end{bmatrix} & & 0 \\ & \ddots & \\ 0 & & \begin{bmatrix} \begin{bmatrix} v_{l'''',m''''} & 0 \\ 0 & v_{l'''',m''''} \end{bmatrix} & 0 \\ 0 & v_{l'''',m''''} \end{bmatrix} \end{bmatrix} C_{MIMO} & if\ mod(R,4) = 3 \\[4em] \frac{1}{\sqrt{RP_{CSI-RS}}} \begin{bmatrix} \begin{bmatrix} \begin{bmatrix} v_{l,m} & 0 \\ 0 & v_{l,m} \end{bmatrix} & 0 \\ 0 & \begin{bmatrix} v_{l,m} & 0 \\ 0 & v_{l,m} \end{bmatrix} \end{bmatrix} & & 0 \\ & \ddots & \\ 0 & & \begin{bmatrix} v_{l'''',m''''} & 0 \\ 0 & v_{l'''',m''''} \end{bmatrix} \end{bmatrix} C_{MIMO} & if\ mod(R,4) = 2 \\[4em] \frac{1}{\sqrt{RP_{CSI-RS}}} \begin{bmatrix} \begin{bmatrix} \begin{bmatrix} v_{l,m} & 0 \\ 0 & v_{l,m} \end{bmatrix} & 0 \\ 0 & \begin{bmatrix} v_{l,m} & 0 \\ 0 & v_{l,m} \end{bmatrix} \end{bmatrix} & & 0 \\ & \ddots & \\ 0 & & \begin{bmatrix} v_{l'''',m''''} \end{bmatrix} \end{bmatrix} C_{MIMO} & if\ mod(R,4) = 1 \end{cases}$$

$$.....(10)$$

In Equation (10), $v_{l,m}$ is 2D DFT virtualization coefficient of selected beam and $C_{MIMO}$ is a MIMO precoding matrix over both panel and polarization that is defined in Equation (11) as follows.

$$C_{MIMO} = C_{polarization} \otimes C_{panel}$$

$$.....(11)$$

Depending on the value of R, $C_{polarization}$ and $C_{panel}$ are defined in Equations (12) and (13), respectively, as follows.

$$C_{polarization} = \begin{bmatrix} 1 \\ \varphi_n \end{bmatrix} or \begin{bmatrix} 1 & 1 \\ \varphi_n & -\varphi_n \end{bmatrix}$$

$$.....(12)$$

$$C_{panel} = \begin{bmatrix} \begin{bmatrix} 1 \\ \varphi_{p_1} \end{bmatrix} \\ \vdots \\ \begin{bmatrix} 1 \\ \varphi_{p_{K-1}} \end{bmatrix} \end{bmatrix} \quad or \quad \begin{bmatrix} \begin{bmatrix} 1 & 1 \\ \varphi_{p_1} & -\varphi_{p_1} \end{bmatrix} \\ \vdots \\ \begin{bmatrix} 1 & 1 \\ \varphi_{p_{K-1}} & \varphi_{p_{K-1}} \end{bmatrix} \end{bmatrix}$$

$$.....(13)$$

where $\varphi_n$ is the inter-polarization co-phasing and $\varphi_{p_k}$, $k = 1,.., K - 1$ is the inter-panel co-phasing for $K$ panels with respect to the first panel where in the current specification, $max(K) = 4$ for Mode 1. The above-disclosed scheme follows the same design foundation as in the special design case in the Type I single panel codebook for rank 3 and 4 with CSI-RS ports larger than 16. In this special design case, only one panel was included and the precoder matrix design priority was to first perform transmission over different groups of antenna elements and then perform cross polarization where the co-phasing among antenna element groups (i.e., $\theta_p$) were used as one of the codebook design factors. The disclosed scheme targets multi-panel transmission with extension of the same design foundation over multiple panels, instead of multiple antenna groups of one panel, where inter-panel co-phasing (i.e. $\varphi_p$) is used as one of the precoder matrix design multiplexing factors. A simple codebook design of such a scheme for a one- to- eight layer transmission under Mode 1 with two panels is defined in Equations (13)-(20) as shown below. In Equations (14)-(21), each beam can be used to provide up to rank-4 transmission.

$$W_{l,m,p,n}^{(1)} = \frac{1}{\sqrt{P_{CSI-RS}}} \begin{bmatrix} v_{l,m} \\ \varphi_p v_{l,m} \\ \varphi_n v_{l,m} \\ \varphi_n \varphi_p v_{l,m} \end{bmatrix}$$

$$.....(14)$$

$$W_{l,m,p,n}^{(2)} = \frac{1}{\sqrt{2P_{CSI-RS}}} \begin{bmatrix} v_{l,m} & v_{l,m} \\ \varphi_p v_{l,m} & -\varphi_p v_{l,m} \\ \varphi_n v_{l,m} & \varphi_n v_{l,m} \\ \varphi_n \varphi_p v_{l,m} & -\varphi_n \varphi_p v_{l,m} \end{bmatrix}$$

$$.....(15)$$

$$W_{l,m,p,n}^{(3)} = \frac{1}{\sqrt{3P_{CSI-RS}}} \begin{bmatrix} v_{l,m} & v_{l,m} & v_{l,m} \\ \varphi_p v_{l,m} & -\varphi_p v_{l,m} & \varphi_p v_{l,m} \\ \varphi_n v_{l,m} & \varphi_n v_{l,m} & -\varphi_n v_{l,m} \\ \varphi_n \varphi_p v_{l,m} & -\varphi_n \varphi_p v_{l,m} & -\varphi_n \varphi_p v_{l,m} \end{bmatrix}$$

$$.....(16)$$

$$W_{l,m,p,n}^{(4)} = \frac{1}{\sqrt{4P_{CSI-RS}}} \begin{bmatrix} v_{l,m} & v_{l,m} & v_{l,m} & v_{l,m} \\ \varphi_p v_{l,m} & -\varphi_p v_{l,m} & \varphi_p v_{l,m} & -\varphi_p v_{l,m} \\ \varphi_n v_{l,m} & \varphi_n v_{l,m} & -\varphi_n v_{l,m} & -\varphi_n v_{l,m} \\ \varphi_n \varphi_p v_{l,m} & -\varphi_n \varphi_p v_{l,m} & -\varphi_n \varphi_p v_{l,m} & \varphi_n \varphi_p v_{l,m} \end{bmatrix}$$

$$.....(17)$$

$$W^{(5)}_{l,l',m,m',p,n} = \frac{1}{\sqrt{5P_{CSI-RS}}} \begin{bmatrix} v_{l,m} & v_{l,m} & v_{l,m} & v_{l,m} & v_{l',m'} \\ \varphi_p v_{l,m} & -\varphi_p v_{l,m} & \varphi_p v_{l,m} & -\varphi_p v_{l,m} & \varphi_p v_{l',m'} \\ \varphi_n v_{l,m} & \varphi_n v_{l,m} & -\varphi_n v_{l,m} & -\varphi_n v_{l,m} & \varphi_n v_{l',m'} \\ \varphi_n \varphi_p v_{l,m} & -\varphi_n \varphi_p v_{l,m} & -\varphi_n \varphi_p v_{l,m} & \varphi_n \varphi_p v_{l,m} & \varphi_n \varphi_p v_{l',m'} \end{bmatrix}$$

$$.....(18)$$

$$W^{(6)}_{l,l',m,m',p,n}$$

$$= \frac{1}{\sqrt{6P_{CSI-RS}}} \begin{bmatrix} v_{l,m} & v_{l,m} & v_{l,m} & v_{l,m} & v_{l',m'} & v_{l',m'} \\ \varphi_p v_{l,m} & -\varphi_p v_{l,m} & \varphi_p v_{l,m} & -\varphi_p v_{l,m} & \varphi_p v_{l',m'} & -\varphi_p v_{l',m'} \\ \varphi_n v_{l,m} & \varphi_n v_{l,m} & -\varphi_n v_{l,m} & -\varphi_n v_{l,m} & \varphi_n v_{l',m'} & \varphi_n v_{l',m'} \\ \varphi_n \varphi_p v_{l,m} & -\varphi_n \varphi_p v_{l,m} & -\varphi_n \varphi_p v_{l,m} & \varphi_n \varphi_p v_{l,m} & \varphi_n \varphi_p v_{l',m'} & -\varphi_n \varphi_p v_{l',m'} \end{bmatrix}$$

$$.....(19)$$

$$W^{(7)}_{l,l',m,m',p,n}$$

$$= \frac{1}{\sqrt{7P_{CSI-RS}}} \begin{bmatrix} v_{l,m} & v_{l,m} & v_{l,m} & v_{l,m} & v_{l',m'} & v_{l',m'} & v_{l',m'} \\ \varphi_p v_{l,m} & -\varphi_p v_{l,m} & \varphi_p v_{l,m} & -\varphi_p v_{l,m} & \varphi_p v_{l',m'} & -\varphi_p v_{l',m'} & \varphi_p v_{l',m'} \\ \varphi_n v_{l,m} & \varphi_n v_{l,m} & -\varphi_n v_{l,m} & -\varphi_n v_{l,m} & \varphi_n v_{l',m'} & \varphi_n v_{l',m'} & -\varphi_n v_{l',m'} \\ \varphi_n \varphi_p v_{l,m} & -\varphi_n \varphi_p v_{l,m} & -\varphi_n \varphi_p v_{l,m} & \varphi_n \varphi_p v_{l,m} & \varphi_n \varphi_p v_{l',m'} & -\varphi_n \varphi_p v_{l',m'} & -\varphi_n \varphi_p v_{l',m'} \end{bmatrix}$$

$$.....(20)$$

$$W^{(8)}_{l,l',m,m',p,n}$$

$$= \frac{1}{\sqrt{8P_{CSI-RS}}} \begin{bmatrix} v_{l,m} & v_{l,m} & v_{l,m} & v_{l,m} & v_{l',m'} & v_{l',m'} & v_{l',m'} & v_{l',m'} \\ \varphi_p v_{l,m} & -\varphi_p v_{l,m} & \varphi_p v_{l,m} & -\varphi_p v_{l,m} & \varphi_p v_{l',m'} & -\varphi_p v_{l',m'} & \varphi_p v_{l',m'} & -\varphi_p v_{l',m'} \\ \varphi_n v_{l,m} & \varphi_n v_{l,m} & -\varphi_n v_{l,m} & -\varphi_n v_{l,m} & \varphi_n v_{l',m'} & \varphi_n v_{l',m'} & -\varphi_n v_{l',m'} & -\varphi_n v_{l',m'} \\ \varphi_n \varphi_p v_{l,m} & -\varphi_n \varphi_p v_{l,m} & -\varphi_n \varphi_p v_{l,m} & \varphi_n \varphi_p v_{l,m} & \varphi_n \varphi_p v_{l',m'} & -\varphi_n \varphi_p v_{l',m'} & -\varphi_n \varphi_p v_{l',m'} & \varphi_n \varphi_p v_{l',m'} \end{bmatrix}$$

$$.....(21)$$

In the scheme defined in Equations (14) - (21), the precoder matrix design priority is transmission over multi-panel, cross polarization and multi-beam. This design may be inefficient for cross polar antenna panels where cross polarization transmission is prioritized over multi-panel transmission. Hence, another design approach for the disclosed scheme is to change the precoder matrix design priority rule to cross polarization, multi-panel and multi-beam transmissions. For example, the codebook design for a one- to- eight layer transmission under Mode 1 with two panels is defined in Equations (22) - (29) as shown below. Similar to Equations (14) - (21), each beam in Equations (22) - (29) can be used to provide up to rank-4 transmission.

$$W^{(1)}_{l,m,p,n} = \frac{1}{\sqrt{P_{CSI-RS}}} \begin{bmatrix} v_{l,m} \\ \varphi_n v_{l,m} \\ \varphi_p v_{l,m} \\ \varphi_n \varphi_p v_{l,m} \end{bmatrix}$$

$$.....(22)$$

$$W_{l,m,p,n}^{(2)} = \frac{1}{\sqrt{2P_{CSI-RS}}} \begin{bmatrix} v_{l,m} & v_{l,m} \\ \varphi_n v_{l,m} & -\varphi_n v_{l,m} \\ \varphi_p v_{l,m} & \varphi_p v_{l,m} \\ \varphi_n \varphi_p v_{l,m} & -\varphi_n \varphi_p v_{l,m} \end{bmatrix}$$

$$.....(23)$$

$$W_{l,m,p,n}^{(3)} = \frac{1}{\sqrt{3P_{CSI-RS}}} \begin{bmatrix} v_{l,m} & v_{l,m} & v_{l,m} \\ \varphi_n v_{l,m} & -\varphi_n v_{l,m} & \varphi_n v_{l,m} \\ \varphi_p v_{l,m} & \varphi_p v_{l,m} & -\varphi_p v_{l,m} \\ \varphi_n \varphi_p v_{l,m} & -\varphi_n \varphi_p v_{l,m} & -\varphi_n \varphi_p v_{l,m} \end{bmatrix}$$

$$.....(24)$$

$$W_{l,m,p,n}^{(4)} = \frac{1}{\sqrt{4P_{CSI-RS}}} \begin{bmatrix} v_{l,m} & v_{l,m} & v_{l,m} & v_{l,m} \\ \varphi_n v_{l,m} & -\varphi_n v_{l,m} & \varphi_n v_{l,m} & -\varphi_n v_{l,m} \\ \varphi_p v_{l,m} & \varphi_p v_{l,m} & -\varphi_p v_{l,m} & -\varphi_p v_{l,m} \\ \varphi_n \varphi_p v_{l,m} & -\varphi_n \varphi_p v_{l,m} & -\varphi_n \varphi_p v_{l,m} & \varphi_n \varphi_p v_{l,m} \end{bmatrix}$$

$$.....(25)$$

$$W_{l,l',m,m',p,n}^{(5)} = \frac{1}{\sqrt{5P_{CSI-RS}}} \begin{bmatrix} v_{l,m} & v_{l,m} & v_{l,m} & v_{l,m} & v_{l',m'} \\ \varphi_n v_{l,m} & -\varphi_n v_{l,m} & \varphi_n v_{l,m} & -\varphi_n v_{l,m} & \varphi_n v_{l',m'} \\ \varphi_p v_{l,m} & \varphi_p v_{l,m} & -\varphi_p v_{l,m} & -\varphi_p v_{l,m} & \varphi_p v_{l',m'} \\ \varphi_n \varphi_p v_{l,m} & -\varphi_n \varphi_p v_{l,m} & -\varphi_n \varphi_p v_{l,m} & \varphi_n \varphi_p v_{l,m} & \varphi_n \varphi_p v_{l',m'} \end{bmatrix}$$

$$.....(26)$$

$$W_{l,l',m,m',p,n}^{(6)}$$

$$= \frac{1}{\sqrt{6P_{CSI-RS}}} \begin{bmatrix} v_{l,m} & v_{l,m} & v_{l,m} & v_{l,m} & v_{l',m'} & v_{l',m'} \\ \varphi_n v_{l,m} & -\varphi_n v_{l,m} & \varphi_n v_{l,m} & -\varphi_n v_{l,m} & \varphi_n v_{l',m'} & -\varphi_n v_{l',m'} \\ \varphi_p v_{l,m} & \varphi_p v_{l,m} & -\varphi_p v_{l,m} & -\varphi_p v_{l,m} & \varphi_p v_{l',m'} & \varphi_p v_{l',m'} \\ \varphi_n \varphi_p v_{l,m} & -\varphi_n \varphi_p v_{l,m} & -\varphi_n \varphi_p v_{l,m} & \varphi_n \varphi_p v_{l,m} & \varphi_n \varphi_p v_{l',m'} & -\varphi_n \varphi_p v_{l',m'} \end{bmatrix}$$

$$.....(27)$$

$$W_{l,l',m,m',p,n}^{(7)}$$

$$= \frac{1}{\sqrt{7P_{CSI-RS}}} \begin{bmatrix} v_{l,m} & v_{l,m} & v_{l,m} & v_{l,m} & v_{l',m'} & v_{l',m'} & v_{l',m'} \\ \varphi_n v_{l,m} & -\varphi_n v_{l,m} & \varphi_n v_{l,m} & -\varphi_n v_{l,m} & \varphi_n v_{l',m'} & -\varphi_n v_{l',m'} & \varphi_n v_{l',m'} \\ \varphi_p v_{l,m} & \varphi_p v_{l,m} & -\varphi_p v_{l,m} & -\varphi_p v_{l,m} & \varphi_p v_{l',m'} & \varphi_p v_{l',m'} & -\varphi_p v_{l',m'} \\ \varphi_n \varphi_p v_{l,m} & -\varphi_n \varphi_p v_{l,m} & -\varphi_n \varphi_p v_{l,m} & \varphi_n \varphi_p v_{l,m} & \varphi_n \varphi_p v_{l',m'} & -\varphi_n \varphi_p v_{l',m'} & -\varphi_n \varphi_p v_{l',m'} \end{bmatrix}$$

$$.....(28)$$

$$W^{(8)}_{l,l',m,m',p,n}$$

$$= \frac{1}{\sqrt{8P_{CSI-RS}}} \begin{bmatrix} v_{l,m} & v_{l,m} & v_{l,m} & v_{l,m} & v_{l',m'} & v_{l',m'} & v_{l',m'} & v_{l',m'} \\ \varphi_n v_{l,m} & -\varphi_n v_{l,m} & \varphi_n v_{l,m} & -\varphi_n v_{l,m} & \varphi_n v_{l',m'} & -\varphi_n v_{l',m'} & \varphi_n v_{l',m'} & -\varphi_n v_{l',m'} \\ \varphi_p v_{l,m} & \varphi_p v_{l,m} & -\varphi_p v_{l,m} & -\varphi_p v_{l,m} & \varphi_p v_{l',m'} & \varphi_p v_{l',m'} & -\varphi_p v_{l',m'} & -\varphi_p v_{l',m'} \\ \varphi_n\varphi_p v_{l,m} & -\varphi_n\varphi_p v_{l,m} & -\varphi_n\varphi_p v_{l,m} & \varphi_n\varphi_p v_{l,m} & \varphi_n\varphi_p v_{l',m'} & -\varphi_n\varphi_p v_{l',m'} & -\varphi_n\varphi_p v_{l',m'} & \varphi_n\varphi_p v_{l',m'} \end{bmatrix}$$

$$\dots\dots(29)$$

In the scheme defined in Equations (22) - (29), the precoder matrix design priority is cross polarization, multi-panel and multi-beam transmissions. However, for consistency with the current specification, the prioritization rule of this codebook design scheme is further modified to first perform cross polarization followed by multi-beam transmission with up to two beams as in the current specification for the Type I multi-panel codebook, and then multi-panel transmissions. Thus, the codebook design for a one- to- eight layer transmission under Mode 1 for a two panel scenario is defined below in Equations (30) - (37) where the codebook for one to four layer transmission is identical to the current specification.

$$W^{(1)}_{l,m,p,n} = \frac{1}{\sqrt{P_{CSI-RS}}} \begin{bmatrix} v_{l,m} \\ \varphi_n v_{l,m} \\ \varphi_p v_{l,m} \\ \varphi_n\varphi_p v_{l,m} \end{bmatrix}$$

$$\dots\dots(30)$$

$$W^{(2)}_{l,l',m,m',p,n} = \frac{1}{\sqrt{2P_{CSI-RS}}} \begin{bmatrix} v_{l,m} & v_{l',m'} \\ \varphi_n v_{l,m} & \varphi_n v_{l',m'} \\ \varphi_p v_{l,m} & \varphi_p v_{l',m'} \\ \varphi_n\varphi_p v_{l,m} & \varphi_n\varphi_p v_{l',m'} \end{bmatrix}$$

$$\dots\dots(31)$$

$$W^{(3)}_{l,l',m,m',p,n} = \frac{1}{\sqrt{3P_{CSI-RS}}} \begin{bmatrix} v_{l,m} & v_{l',m'} & v_{l,m} \\ \varphi_n v_{l,m} & \varphi_n v_{l',m'} & -\varphi_n v_{l,m} \\ \varphi_p v_{l,m} & \varphi_p v_{l',m'} & \varphi_p v_{l,m} \\ \varphi_n\varphi_p v_{l,m} & \varphi_n\varphi_p v_{l',m'} & -\varphi_n\varphi_p v_{l,m} \end{bmatrix}$$

$$\dots\dots(32)$$

$$W^{(4)}_{l,l',m,m',p,n} = \frac{1}{\sqrt{4P_{CSI-RS}}} \begin{bmatrix} v_{l,m} & v_{l,m} & v_{l',m'} & v_{l',m'} \\ \varphi_n v_{l,m} & -\varphi_n v_{l,m} & \varphi_n v_{l',m'} & -\varphi_n v_{l',m'} \\ \varphi_p v_{l,m} & \varphi_p v_{l,m} & \varphi_p v_{l',m'} & \varphi_p v_{l',m'} \\ \varphi_n\varphi_p v_{l,m} & -\varphi_n\varphi_p v_{l,m} & \varphi_n\varphi_p v_{l',m'} & -\varphi_n\varphi_p v_{l',m'} \end{bmatrix}$$

$$\dots\dots(33)$$

$$W^{(5)}_{l,l',m,m',p,n} = \frac{1}{\sqrt{5P_{CSI-RS}}} \begin{bmatrix} v_{l,m} & v_{l,m} & v_{l',m'} & v_{l',m'} & v_{l,m} \\ \varphi_n v_{l,m} & -\varphi_n v_{l,m} & \varphi_n v_{l',m'} & -\varphi_n v_{l',m'} & \varphi_n v_{l,m} \\ \varphi_p v_{l,m} & \varphi_p v_{l,m} & \varphi_p v_{l',m'} & \varphi_p v_{l',m'} & -\varphi_p v_{l,m} \\ \varphi_n\varphi_p v_{l,m} & -\varphi_n\varphi_p v_{l,m} & \varphi_n\varphi_p v_{l',m'} & -\varphi_n\varphi_p v_{l',m'} & -\varphi_n\varphi_p v_{l,m} \end{bmatrix}$$

$$\dots\dots(34)$$

$$W^{(6)}_{l,l',m,m',p,n}$$

$$= \frac{1}{\sqrt{6P_{CSI-RS}}} \begin{bmatrix} v_{l,m} & v_{l,m} & v_{l',m'} & v_{l',m'} & v_{l,m} & v_{l,m} \\ \varphi_n v_{l,m} & -\varphi_n v_{l,m} & \varphi_n v_{l',m'} & -\varphi_n v_{l',m'} & \varphi_n v_{l,m} & -\varphi_n v_{l,m} \\ \varphi_p v_{l,m} & \varphi_p v_{l,m} & \varphi_p v_{l',m'} & \varphi_p v_{l',m'} & -\varphi_p v_{l,m} & -\varphi_p v_{l,m} \\ \varphi_n \varphi_p v_{l,m} & -\varphi_n \varphi_p v_{l,m} & \varphi_n \varphi_p v_{l',m'} & -\varphi_n \varphi_p v_{l',m'} & -\varphi_n \varphi_p v_{l,m} & \varphi_n \varphi_p v_{l,m} \end{bmatrix}$$

$$\dots\dots(35)$$

$$W^{(7)}_{l,l',m,m',p,n}$$

$$= \frac{1}{\sqrt{7P_{CSI-RS}}} \begin{bmatrix} v_{l,m} & v_{l,m} & v_{l',m'} & v_{l',m'} & v_{l,m} & v_{l,m} & v_{l,m} \\ \varphi_n v_{l,m} & -\varphi_n v_{l,m} & \varphi_n v_{l',m'} & -\varphi_n v_{l',m'} & \varphi_n v_{l,m} & -\varphi_n v_{l,m} & \varphi_n v_{l,m} \\ \varphi_p v_{l,m} & \varphi_p v_{l,m} & \varphi_p v_{l',m'} & \varphi_p v_{l',m'} & -\varphi_p v_{l,m} & -\varphi_p v_{l,m} & -\varphi_p v_{l,m} \\ \varphi_n \varphi_p v_{l,m} & -\varphi_n \varphi_p v_{l,m} & \varphi_n \varphi_p v_{l',m'} & -\varphi_n \varphi_p v_{l',m'} & -\varphi_n \varphi_p v_{l,m} & \varphi_n \varphi_p v_{l,m} & -\varphi_n \varphi_p v_{l,m} \end{bmatrix}$$

$$\dots\dots(36)$$

$$W^{(8)}_{l,l',m,m',p,n}$$

$$= \frac{1}{\sqrt{8P_{CSI-RS}}} \begin{bmatrix} v_{l,m} & v_{l,m} & v_{l',m'} & v_{l',m'} & v_{l,m} & v_{l,m} & v_{l,m} & v_{l,m} \\ \varphi_n v_{l,m} & -\varphi_n v_{l,m} & \varphi_n v_{l',m'} & -\varphi_n v_{l',m'} & \varphi_n v_{l,m} & -\varphi_n v_{l,m} & \varphi_n v_{l,m} & -\varphi_n v_{l,m} \\ \varphi_p v_{l,m} & \varphi_p v_{l,m} & \varphi_p v_{l',m'} & \varphi_p v_{l',m'} & -\varphi_p v_{l,m} & -\varphi_p v_{l,m} & -\varphi_p v_{l,m} & -\varphi_p v_{l,m} \\ \varphi_n \varphi_p v_{l,m} & -\varphi_n \varphi_p v_{l,m} & \varphi_n \varphi_p v_{l',m'} & -\varphi_n \varphi_p v_{l',m'} & -\varphi_n \varphi_p v_{l,m} & \varphi_n \varphi_p v_{l,m} & -\varphi_n \varphi_p v_{l,m} & \varphi_n \varphi_p v_{l,m} \end{bmatrix}$$

$$\dots\dots(37)$$

It is assumed all panels are identical in terms of the number of antennas, spacing, and inter-polarization co-phasing. Since a constant inter-polarization co-phasing per panel may be an unrealistic assumption, Mode 2 reporting provides more accurate and higher resolution information on the combination of inter-panel and inter-polarization co-phasing. With the introduction of MIMO precoding over panels, the Mode 2 codebook for a rank-R transmission is modified as shown below in Equation (38).

$$W^{(R)}_{l,l',..l''',m,m',...,m''',p,n}$$

$$= \begin{cases} \dfrac{1}{\sqrt{RP_{CSI-RS}}} \begin{bmatrix} \begin{bmatrix} \begin{bmatrix} v_{l,m} & 0 \\ 0 & v_{l,m} \end{bmatrix} & 0 \\ 0 & \begin{bmatrix} v_{l,m} & 0 \\ 0 & v_{l,m} \end{bmatrix} \end{bmatrix} & & 0 \\ & \ddots & \\ 0 & & \begin{bmatrix} \begin{bmatrix} v_{l''',m'''} & 0 \\ 0 & v_{l''',m'''} \end{bmatrix} & 0 \\ 0 & \begin{bmatrix} v_{l''',m'''} & 0 \\ 0 & v_{l''',m'''} \end{bmatrix} \end{bmatrix} \end{bmatrix} C_{MIMO} & if\ mod(R,4)=0 \\[40pt] \dfrac{1}{\sqrt{RP_{CSI-RS}}} \begin{bmatrix} \begin{bmatrix} \begin{bmatrix} v_{l,m} & 0 \\ 0 & v_{l,m} \end{bmatrix} & 0 \\ 0 & \begin{bmatrix} v_{l,m} & 0 \\ 0 & v_{l,m} \end{bmatrix} \end{bmatrix} & & 0 \\ & \ddots & \\ 0 & & \begin{bmatrix} \begin{bmatrix} v_{l''',m'''} & 0 \\ 0 & v_{l''',m'''} \end{bmatrix} & 0 \\ 0 & v_{l''',m'''} \end{bmatrix} \end{bmatrix} C_{MIMO} & if\ mod(R,4)=3 \\[40pt] \dfrac{1}{\sqrt{RP_{CSI-RS}}} \begin{bmatrix} \begin{bmatrix} \begin{bmatrix} v_{l,m} & 0 \\ 0 & v_{l,m} \end{bmatrix} & 0 \\ 0 & \begin{bmatrix} v_{l,m} & 0 \\ 0 & v_{l,m} \end{bmatrix} \end{bmatrix} & & 0 \\ & \ddots & \\ 0 & & \begin{bmatrix} v_{l''',m'''} & 0 \\ 0 & v_{l''',m'''} \end{bmatrix} \end{bmatrix} C_{MIMO} & if\ mod(R,4)=2 \\[40pt] \dfrac{1}{\sqrt{RP_{CSI-RS}}} \begin{bmatrix} \begin{bmatrix} \begin{bmatrix} v_{l,m} & 0 \\ 0 & v_{l,m} \end{bmatrix} & 0 \\ 0 & \begin{bmatrix} v_{l,m} & 0 \\ 0 & v_{l,m} \end{bmatrix} \end{bmatrix} & & 0 \\ & \ddots & \\ 0 & & \begin{bmatrix} v_{l''',m'''} \end{bmatrix} \end{bmatrix} C_{MIMO} & if\ mod(R,4)=1 \end{cases}$$

$$\dots\dots(38)$$

In Equation (38), $C_{MIMO}$ is a MIMO precoding matrix over both panel and polarization that is defined in Equation (39) as follows.

$$C_{MIMO} = \begin{bmatrix} \begin{bmatrix} 1 & 1 & 1 & 1 \\ \varphi_{n_0} & -\varphi_{n_0} & \varphi_{n_0} & -\varphi_{n_0} \\ a_{p_1}b_{n_1} & a_{p_1}b_{n_1} & -a_{p_1}b_{n_1} & -a_{p_1}b_{n_1} \\ a_{p_2}b_{n_2} & -a_{p_2}b_{n_2} & -a_{p_2}b_{n_2} & a_{p_2}b_{n_2} \end{bmatrix} \\ \vdots \\ \begin{bmatrix} 1 & 1 & 1 & 1 \\ \varphi_{n_{K-2}} & -\varphi_{n_{K-2}} & \varphi_{n_{K-2}} & -\varphi_{n_{K-2}} \\ a_{p_{2K-3}}b_{n_{2K-3}} & a_{p_{2K-3}}b_{n_{2K-3}} & -a_{p_{2K-3}}b_{n_{2K-3}} & -a_{p_{2K-3}}b_{n_{2K-3}} \\ a_{p_{2K-2}}b_{n_{2K-2}} & -a_{p_{2K-2}}b_{n_{2K-2}} & -a_{p_{2K-2}}b_{n_{2K-2}} & a_{p_{2K-2}}b_{n_{2K-2}} \end{bmatrix} \end{bmatrix}$$

$$\dots\dots(39)$$

In Equation (39), $a_{p_k}$ $k$ = 1, ...,2($K$ - 1) are wide-band combined inter-polarization and inter-panel co-phasing reported at stage 1 of Mode 2 for K panels (i.e. two phase shifts of $a_{p2k-3}$ and $a_{p2k-2}$ for $k^{th}$ panel) and $\varphi_{n_k}$ $k$ = 0,..,$K$ - 2 and $b_{n_k}$ $k$ = 1,..,2($K$ - 1) are sub-band combined inter-polarization and inter-panel co-phasing reported at stage 2 of Mode 2 for $K$ panels (three phase shifts of $\varphi_{n_{k-2}}$, $b_{n_{2k-3}}$, $b_{n_{2k-2}}$ for $k^{th}$ panel). In the current specification, $max(K)$ = 2 for Mode 2.

In the above scheme, the priority of precoder matrix design is cross polarization, multi-panel transmission, and multi-beam transmissions. As previously discussed, the codebook design scheme priority can be modified to first perform cross polarization, followed by multi-beam transmission with up to two beams as in the current specification for the Type I multi-panel codebook, and then multi-panel transmissions. The codebook design for a one- to- eight layer transmission under Mode 2 with two panels and with spatial multiplexing prioritization consistent with the current specification is defined in Equations (40) - (47) as follows.

$$W_{l,m,p,n}^{(1)} = \frac{1}{\sqrt{P_{CSI-RS}}} \begin{bmatrix} v_{l,m} \\ \varphi_{n_0} v_{l,m} \\ a_{p_1} b_{n_1} v_{l,m} \\ a_{p_2} b_{n_2} v_{l,m} \end{bmatrix}$$

$$.....(40)$$

$$W_{l,l',m,m',p,n}^{(2)} = \frac{1}{\sqrt{2P_{CSI-RS}}} \begin{bmatrix} v_{l,m} & v_{l',m'} \\ \varphi_{n_0} v_{l,m} & \varphi_{n_0} v_{l',m'} \\ a_{p_1} b_{n_1} v_{l,m} & a_{p_1} b_{n_1} v_{l',m'} \\ a_{p_2} b_{n_2} v_{l,m} & a_{p_2} b_{n_2} v_{l',m'} \end{bmatrix}$$

$$.....(41)$$

$$W_{l,l',m,m',p,n}^{(3)} = \frac{1}{\sqrt{3P_{CSI-RS}}} \begin{bmatrix} v_{l,m} & v_{l',m'} & v_{l,m} \\ \varphi_{n_0} v_{l,m} & \varphi_{n_0} v_{l',m'} & -\varphi_{n_0} v_{l,m} \\ a_{p_1} b_{n_1} v_{l,m} & a_{p_1} b_{n_1} v_{l',m'} & a_{p_1} b_{n_1} v_{l,m} \\ a_{p_2} b_{n_2} v_{l,m} & a_{p_2} b_{n_2} v_{l',m'} & -a_{p_2} b_{n_2} v_{l,m} \end{bmatrix}$$

$$.....(42)$$

$$W_{l,l',m,m',p,n}^{(4)} = \frac{1}{\sqrt{4P_{CSI-RS}}} \begin{bmatrix} v_{l,m} & v_{l',m'} & v_{l,m} & v_{l',m'} \\ \varphi_{n_0} v_{l,m} & \varphi_{n_0} v_{l',m'} & -\varphi_{n_0} v_{l,m} & -\varphi_{n_0} v_{l',m'} \\ a_{p_1} b_{n_1} v_{l,m} & a_{p_1} b_{n_1} v_{l',m'} & a_{p_1} b_{n_1} v_{l,m} & a_{p_1} b_{n_1} v_{l',m'} \\ a_{p_2} b_{n_2} v_{l,m} & a_{p_2} b_{n_2} v_{l',m'} & -a_{p_2} b_{n_2} v_{l,m} & -a_{p_2} b_{n_2} v_{l',m'} \end{bmatrix}$$

$$.....(43)$$

$$W_{l,l',m,m',p,n}^{(5)} = \frac{1}{\sqrt{4P_{CSI-RS}}} \begin{bmatrix} v_{l,m} & v_{l,m} & v_{l',m'} & v_{l',m'} & v_{l,m} \\ \varphi_{n_0} v_{l,m} & -\varphi_{n_0} v_{l,m} & \varphi_{n_0} v_{l',m'} & -\varphi_n v_{l',m'} & \varphi_{n_0} v_{l,m} \\ a_{p_1} b_{n_1} v_{l,m} & a_{p_1} b_{n_1} v_{l,m} & a_{p_1} b_{n_1} v_{l',m'} & \varphi_p v_{l',m'} & -a_{p_1} b_{n_1} v_{l,m} \\ a_{p_2} b_{n_2} v_{l,m} & -a_{p_2} b_{n_2} v_{l,m} & a_{p_2} b_{n_2} v_{l',m'} & -\varphi_n \varphi_p v_{l',m'} & -a_{p_2} b_{n_2} v_{l,m} \end{bmatrix}$$

$$.....(44)$$

$$W^{(6)}_{l,l',m,m',p,n}$$

$$= \frac{1}{\sqrt{6P_{CSI-RS}}}\begin{bmatrix} v_{l,m} & v_{l,m} & v_{l',m'} & v_{l',m'} & v_{l,m} & v_{l,m} \\ \varphi_{n_0}v_{l,m} & -\varphi_{n_0}v_{l,m} & \varphi_{n_0}v_{l',m'} & -\varphi_n v_{l',m'} & \varphi_{n_0}v_{l,m} & -\varphi_{n_0}v_{l,m} \\ a_{p_1}b_{n_1}v_{l,m} & a_{p_1}b_{n_1}v_{l,m} & a_{p_1}b_{n_1}v_{l',m'} & \varphi_p v_{l',m'} & -a_{p_1}b_{n_1}v_{l,m} & -a_{p_1}b_{n_1}v_{l,m} \\ a_{p_2}b_{n_2}v_{l,m} & -a_{p_2}b_{n_2}v_{l,m} & a_{p_2}b_{n_2}v_{l',m'} & -\varphi_n\varphi_p v_{l',m'} & -a_{p_2}b_{n_2}v_{l,m} & a_{p_2}b_{n_2}v_{l,m} \end{bmatrix}$$

$$\ldots(45)$$

$$W^{(7)}_{l,l',m,m',p,n}$$

$$= \frac{1}{\sqrt{7P_{CSI-RS}}}\begin{bmatrix} v_{l,m} & v_{l,m} & v_{l',m'} & v_{l',m'} & v_{l,m} & v_{l,m} & v_{l',m'} \\ \varphi_{n_0}v_{l,m} & -\varphi_{n_0}v_{l,m} & \varphi_{n_0}v_{l',m'} & -\varphi_n v_{l',m'} & \varphi_{n_0}v_{l,m} & -\varphi_{n_0}v_{l,m} & \varphi_{n_0}v_{l',m'} \\ a_{p_1}b_{n_1}v_{l,m} & a_{p_1}b_{n_1}v_{l,m} & a_{p_1}b_{n_1}v_{l',m'} & \varphi_p v_{l',m'} & -a_{p_1}b_{n_1}v_{l,m} & -a_{p_1}b_{n_1}v_{l,m} & -a_{p_1}b_{n_1}v_{l',m'} \\ a_{p_2}b_{n_2}v_{l,m} & -a_{p_2}b_{n_2}v_{l,m} & a_{p_2}b_{n_2}v_{l',m'} & -\varphi_n\varphi_p v_{l',m'} & -a_{p_2}b_{n_2}v_{l,m} & a_{p_2}b_{n_2}v_{l,m} & -a_{p_2}b_{n_2}v_{l',m'} \end{bmatrix}$$

$$\ldots(46)$$

$$W^{(8)}_{l,l',m,m',p,n}$$

$$= \frac{1}{\sqrt{8P_{CSI-RS}}}\begin{bmatrix} v_{l,m} & v_{l,m} & v_{l',m'} & v_{l',m'} & v_{l,m} & v_{l,m} & v_{l',m'} & v_{l',m'} \\ \varphi_{n_0}v_{l,m} & -\varphi_{n_0}v_{l,m} & \varphi_{n_0}v_{l',m'} & -\varphi_n v_{l',m'} & \varphi_{n_0}v_{l,m} & -\varphi_{n_0}v_{l,m} & \varphi_{n_0}v_{l',m'} & -\varphi_{n_0}v_{l',m'} \\ a_{p_1}b_{n_1}v_{l,m} & a_{p_1}b_{n_1}v_{l,m} & a_{p_1}b_{n_1}v_{l',m'} & \varphi_p v_{l',m'} & -a_{p_1}b_{n_1}v_{l,m} & -a_{p_1}b_{n_1}v_{l,m} & -a_{p_1}b_{n_1}v_{l',m'} & -a_{p_1}b_{n_1}v_{l',m'} \\ a_{p_2}b_{n_2}v_{l,m} & -a_{p_2}b_{n_2}v_{l,m} & a_{p_2}b_{n_2}v_{l',m'} & -\varphi_n\varphi_p v_{l',m'} & -a_{p_2}b_{n_2}v_{l,m} & a_{p_2}b_{n_2}v_{l,m} & -a_{p_2}b_{n_2}v_{l',m'} & a_{p_2}b_{n_2}v_{l',m'} \end{bmatrix}$$

$$\ldots(47)$$

Type II Codebook refinement for CJT mTRP targeting FDD

The Type II codebook design targets multi-use MIMO scenarios with support of up to two layers. The Type II codebook provides more accurate channel state information compared to the Type I codebook but increases the signaling overhead for PMI reporting. In the Type II codebook design, a set of beams and a set of amplitude and phase shift coefficients are used to generate a weighted combination of beams. The number of beams $L$ that are combined are RRC configured to the UE. Antenna configuration for the Type II codebook design is defined by $N_1$ as the number of cross polar antenna element columns and $N_2$ as the number of cross polar antenna element rows. The number of candidate beam groups to be selected is $N_1N_2$ groups of beams.

The Type II codebook design provides two solutions of single panel and port selection designs where, for both solutions, the PMI reporting has dual stages of reporting. In both Type II codebook designs, the UE reports at stage 1 the location of one beam within the group (i.e., a fixed location across group) as well as a set of $L$ beam groups. At stage 1, a set of beam groups is selected with the assumption that the same beams are used for different polarization and layers. The strongest beam is then identified from all beam groups across both polarizations and layers and wideband amplitude coefficients are applied to the beams accordingly. The beams associated with each polarization and layer are considered to be independent. The UE reports phase shift of different beams relative to the strongest beam as well as sub-band amplitude coefficients at stage 2 reporting.

The $i$ parameters are used by the UE to report channel state information to a gNB, where $i_{1,1}$ indicates one specific location within a beam group that is identified with $q_1$, $q_2$ parameters, $i_{1,2}$ indicates $L$ beam groups selection among $N_1N_2$ candidate beam groups (i.e. $i_{1,2}$ indicates one of the $\binom{N_1N_2}{L}$ possible cases) presented by $n_1^{(i)}, n_2^{(i)}$ parameters, $i_{1,3,l}$ is the strongest coefficient (based on having the largest amplitude coefficient or strongest power) on layer $l$, $i_{1,4,l}$ are wideband amplitude coefficients for layer $l$, $i_{2,1,l}$ are phase coefficients for layer $l$ that takes values from QPSK or 8PSK, $i_{2,2,l}$ is sub-band amplitude coefficients for layer $l$.

The Type II port selection codebook solution assumes a gNB already has some knowledge of a propagation channel, either through channel reciprocity or a beam management procedure. Alternatively, the Type II port selection codebook can be seen as a two-step hybrid process, where the first step provides coarse channel state information to the gNB and the second step is similar to the Type II single panel codebook.

Since the gNB has some coarse knowledge of propagation channel, the Type II port selection codebook design is based on a set of actual beamformed CSI-RS transmissions and does not rely on a hypothetical beam position using oversampling factors as in the Type II single panel codebook. In the Type II port selection codebook solution, the first stage of PMI reporting includes reporting of a first beam selection and other $L$ - 1 beams are identified to be adjacent to the first selected beam. The first beam is selected among the over-sampled candidate beams with sampling factor $d$ where port selection sampling (i.e., $d$) is RRC configured to the UE to specify the spacing between candidate beams for first beam selection. The remainder of the PMI reporting procedure is the same as the Type II single panel codebook.

The $i$ parameters are used by the UE to report channel state information to the gNB, where $i_{1,1}$ indicates one specific location of the first selected beam and the other $L$ - 1 beams are located at $i_{1,1}d$ + {1, ..., $L$ - 1}), $i_{1,3,l}$ is the strongest coefficient on layer $l$, $i_{1,4,l}$ are wideband amplitude coefficients for layer $l$, $i_{2,1,l}$ is the phase coefficient for layer $l$ that takes values from QPSK or 8PSK, and $i_{2,2,l}$ is the sub-band amplitude coefficient for layer $l$.

The generation of the precoding matrix for the Type II codebook is based on a linear combination of a set of $L$ beams that are combined using a set of relative amplitude and phase shift coefficients per polarization and per layer. The Type II single panel and port selection codebooks are defined in Equations (48) - (50) as shown below in the current specification for the Type II single panel codebook as in Tables 5.2.2.2.3-5 in TS 38.214.

$$W^{(1)}_{q_1,q_2,n_1,n_2,p_l^{(1)},p_l^{(2)},i_{2,1,1}} = W^1_{q_1,q_2,n_1,n_2,p_l^{(1)},p_l^{(2)},i_{2,1,1}}$$

$$\ldots\ldots(48)$$

$$W^{(2)}_{q_1,q_2,n_1,n_2,p_l^{(1)},p_l^{(2)},i_{2,1,2}} = \frac{1}{\sqrt{2}}\left[W^1_{q_1,q_2,n_1,n_2,p_l^{(1)},p_l^{(2)},i_{2,1,1}} \quad W^2_{q_1,q_2,n_1,n_2,p_l^{(1)},p_l^{(2)},i_{2,1,2}}\right]$$

$$\ldots\ldots(49)$$

with

$$W^l_{q_1,q_2,n_1,n_2,p_l^{(1)},p_l^{(2)},i_{2,1,l}} = \frac{1}{\sqrt{N_1 N_2 \sum_{i=0}^{2L-1}(p_{l,i}^{(1)}p_{l,i}^{(2)})^2}}\begin{bmatrix}\sum_{i=0}^{L-1} v_{m_1^{(i)},m_2^{(i)}} p_{l,i}^{(1)} p_{l,i}^{(2)} \varphi_{l,i} \\ \sum_{i=0}^{L-1} v_{m_1^{(i)},m_2^{(i)}} p_{l,i+L}^{(1)} p_{l,i+L}^{(2)} \varphi_{l,i+L}\end{bmatrix} \quad l = 1,2$$

$$\ldots\ldots(50)$$

where $v_{m_1^{(i)},m_2^{(i)}}$ is the 2D DFT virtualization coefficient for $i^{th}$ beam with $m_1^{(i)} = O_1 n_1^{(i)} + q_1$ and $m_2^{(i)} = O_2 n_2^{(i)} + q_2$, $q_1, q_2$ are indicated by $i_{1,1}$ and $n_1^{(i)}, n_2^{(i)}$ are indicated by $i_{1,2}$, $p_{l,i}^{(1)}, p_{l,i+L}^{(1)}$ and $p_{l,i}^{(2)}, p_{l,i+L}^{(2)}$ are wide-band and sub-band amplitude coefficients for $i^{th}$ beam two polarizations, $\varphi_{l,i}, \varphi_{l,i+L}$ are phase shift coefficients for $i^{th}$ beam two polarizations. Equations (51) - (53) below are defined for the Type II port selection codebook as in Table 5.2.2.2.4-1 in TS 38.214.

$$W^{(1)}_{i_{1,1},p^{(1)}_l,p^{(2)}_l,i_{2,1,1}} = W^1_{i_{1,1},p^{(1)}_l,p^{(2)}_l,i_{2,1,1}}$$

$$.....(51)$$

$$W^{(2)}_{i_{1,1},p^{(1)}_l,p^{(2)}_l,i_{2,1,2}} = \frac{1}{\sqrt{2}}\left[W^1_{i_{1,1},p^{(1)}_l,p^{(2)}_l,i_{2,1,1}} \quad W^2_{i_{1,1},p^{(1)}_l,p^{(2)}_l,i_{2,1,2}}\right]$$

$$.....(52)$$

with

$$W^l_{q_1,q_2,n_1,n_2,p^{(1)}_l,p^{(2)}_l,c_l} = \frac{1}{\sqrt{\sum_{i=0}^{2L-1}(p^{(1)}_{l,i}p^{(2)}_{l,i})^2}}\begin{bmatrix}\sum_{i=0}^{L-1} v_{i_{1,1}d+i}p^{(1)}_{l,i}p^{(2)}_{l,i}\varphi_{l,i} \\ \sum_{i=0}^{L-1} v_{i_{1,1}d+i}p^{(1)}_{l,i+L}p^{(2)}_{l,i+L}\varphi_{l,i+L}\end{bmatrix} \quad l=1,2$$

$$.....(53)$$

Where $v_{i_{1,1}d+i}$ is the 2D DFT virtualization coefficient for the $i^{th}$ beam, $p^{(1)}_{l,i}, p^{(1)}_{l,i+L}$ and $p^{(2)}_{l,i}, p^{(2)}_{l,i+L}$ are wide-band and sub-band amplitude coefficients for the $i^{th}$ beam two polarizations, and $<fJZ,i'$ $\varphi_{l,i+L}$ are phase shift coefficients for the $i^{th}$ beam two polarizations.

A new design for the multi-panel scenario is now disclosed for the Type II codebook to address the CJT scenario. In the current specification, Type II codebook design focuses on providing more detailed channel state information for a single panel scenario in multi-user MIMO deployment and is based on a weighted combination of a set of beams. The relative amplitude and phase shift coefficient for each beam are specified with respect to the strongest beam.

Starting with the Type II single panel codebook and expanding the design for multi-panel to address the CJT scenario, one approach is to introduce an inter-panel co-phasing concept similar to the Type I multi-panel codebook. In such a scheme, the Type II codebook design is enhanced with the assumption that all panels are similar in terms of physical configuration (e.g., the panel shape, antenna elements structure, single or cross polar antenna elements, and arrangement, number, and type of the antenna elements) and different panels are quasi co-located and experience similar long term channel characteristics involving wideband PMI information such as beam selection. Similar to the Type I codebook, each panel has $N_1N_2$ antenna ports. Assuming multiple panels are similar and share the same beams, with the application of inter-panel co-phasing across different panels (i.e., group of $N_1N_2$ ports), coherent joint precoding is achieved across multiple panels for a CJT multi-TRP scenario. In this scheme, a set of $L$ beam groups are first selected to be shared across polarizations, layers and panels. Next, the strongest beam is identified per layer across both polarizations where a set of amplitude and phase shift coefficients are applied to beams accordingly. That is, the beams associated with each polarization and layer are considered to be independent but similar across different panel s. PMI reporting is accomplished by the UE reporting $i_{1,1}$ and $i_{1,2}$ to indicate $L$ beams/beam groups, $i_{1,3,l}$ to indicate the strongest coefficient on layer $l$, $i_{1,4,l}$ to indicate wideband amplitude coefficients for layer $l$, $i_{2,1,l}$ to indicate the phase coefficient for layer $l$, $i_{2,2,l}$ to indicate the sub-band amplitude coefficient for layer $l$, and the $i_{2,3,k}$ parameter is introduced to indicate inter-panel co-phasing for panel k with respect to a first, reference, or predetermined panel. Thus, the Type II multi-panel codebook for a rank R transmission is defined in Equation (54) as follows.

$$W^{(R)}_{q_1,q_2,n_1,n_2,p^{(1)}_l,p^{(2)}_l,i_{2,1,R}} = \frac{1}{\sqrt{R}}\left[W^1_{q_1,q_2,n_1,n_2,p^{(1)}_l,p^{(2)}_l,i_{2,1,1}} \quad \cdots \quad W^R_{q_1,q_2,n_1,n_2,p^{(1)}_l,p^{(2)}_l,i_{2,1,R}}\right]$$

$$.....(54)$$

In Equation (54), each column of $W^{(R)}_{q_1,q_2,n_1,n_2,p_l^{(1)},p_l^{(2)},i_{2,1},R}$ matrix indicates the precoding coefficients for each layer of transmission. The column $l$ corresponding to the precoding coefficient of layer $l$ is defined in Equation (55) as follows.

$$W^l_{q_1,q_2,n_1,n_2,p_l^{(1)},p_l^{(2)},i_{2,1},l} = \frac{1}{\sqrt{N_1 N_2 \sum_{i=0}^{2L-1}(p_{l,i}^{(1)}p_{l,i}^{(2)})^2}} \begin{bmatrix} \begin{bmatrix} \sum_{i=0}^{L-1} v_{m_1^{(i)},m_2^{(i)}} p_{l,i}^{(1)} p_{l,i}^{(2)} \varphi_{l,i} \\ \sum_{i=0}^{L-1} v_{m_1^{(i)},m_2^{(i)}} p_{l,i+L}^{(1)} p_{l,i+L}^{(2)} \varphi_{l,i+L} \end{bmatrix} \\ \vdots \\ \theta_{p_{K-1}} \begin{bmatrix} \sum_{i=0}^{L-1} v_{m_1^{(i)},m_2^{(i)}} p_{l,i}^{(1)} p_{l,i}^{(2)} \varphi_{l,i} \\ \sum_{i=0}^{L-1} v_{m_1^{(i)},m_2^{(i)}} p_{l,i+L}^{(1)} p_{l,i+L}^{(2)} \varphi_{l,i+L} \end{bmatrix} \end{bmatrix} \quad l$$

$$= 1,\ldots,R$$

.....(55)

where the $k^{th}$ matrix block in Equation (55) for $W^l_{q_1,q_2,n_1,n_2,p_l^{(1)},p_l^{(2)},i_{2,1},l}$ , i.e.,

$$\theta_{p_{k-1}} \begin{bmatrix} \sum_{i=0}^{L-1} v_{m_1^{(i)},m_2^{(i)}} p_{l,i}^{(1)} p_{l,i}^{(2)} \varphi_{l,i} \\ \sum_{i=0}^{L-1} v_{m_1^{(i)},m_2^{(i)}} p_{l,i+L}^{(1)} p_{l,i+L}^{(2)} \varphi_{l,i+L} \end{bmatrix},$$

corresponds to the $k^{th}$ panel where $\theta_{p_{k-1}}$ is the inter-panel co-phasing of $k^{th}$ panel with respect to the first panel in order to achieve coherent joint precoding across panels (note that $\theta_{p_0} = 1$ and is omitted from the Equations for conciseness).

The $\sum_{i=0}^{L-1} v_{m_1^{(i)},m_2^{(i)}} p_{l,i}^{(1)} p_{l,i}^{(2)} \varphi_{l,i}$ is the beamforming virtualization coefficients of $N_1 N_2$ ports for first polarized antenna elements and $\sum_{i=0}^{L-1} v_{m_1^{(i)},m_2^{(i)}} p_{l,i+L}^{(1)} p_{l,i+L}^{(2)} \varphi_{l,i+L}$ is the beamforming virtualization coefficients of $N_1 N_2$ ports for second polarized antenna elements in all panels. The beamforming virtualization coefficients are unchanged across all panels as different panels share the same beam per polarization for each layer. The $v_{m_1^{(i)},m_2^{(i)}}$ is the 2D DFT virtualization coefficient for the $i^{th}$ beam, $p_{l,i}^{(1)}, p_{l,i+L}^{(1)}$ and $p_{l,i}^{(2)}, p_{l,i+L}^{(2)}$ are wide-band and sub-band amplitude coefficients for the $i^{th}$ beam two polarizations with respect to the strongest beam, and $\varphi_{l,i}, \varphi_{l,i+L}$ are phase shift coefficients for the $i^{th}$ beam two polarizations with respect to the strongest beam. Hence, $K$ blocks in $W^l_{q_1,q_2,n_1,n_2,p_l^{(1)},p_l^{(2)},i_{2,1},l}$ provide beamforming virtualization coefficients over $K$ groups of $N_1 N_2$ ports that are coherently combined to provide a joint precoder matrix for a multi panel scenario.

Similarly, for the Type II port selection, the enhanced multi-panel codebook design is defined in Equation (56)

as follows.

$$W^{(R)}_{i_{1,1},p_l^{(1)},p_l^{(2)},i_{2,1,R}} = \frac{1}{\sqrt{R}}\left[W^{1}_{i_{1,1},p_l^{(1)},p_l^{(2)},i_{2,1,1}} \quad \cdots \quad W^{R}_{i_{1,1},p_l^{(1)},p_l^{(2)},i_{2,1,R}}\right]$$

$$\dots (56)$$

where precoding coefficients of layer *l* (i.e., column *l* of $W^{(R)}_{i_{1,1},p_l^{(1)},p_l^{(2)},i_{2,1,R}}$ ) is defined in Equation (57) as follows.

$$W^{l}_{i_{1,1},p_l^{(1)},p_l^{(2)},i_{2,1,l}} = \frac{1}{\sqrt{\sum_{i=0}^{2L-1}(p_{l,i}^{(1)}p_{l,i}^{(2)})^2}}\begin{bmatrix}\begin{bmatrix}\sum_{i=0}^{L-1}v_{i_{1,1}d+i}p_{l,i}^{(1)}p_{l,i}^{(2)}\varphi_{l,i}\\\sum_{i=0}^{L-1}v_{i_{1,1}d+i}p_{l,i+L}^{(1)}p_{l,i+L}^{(2)}\varphi_{l,i+L}\end{bmatrix}\\\vdots\\\theta_{p_{K-1}}\begin{bmatrix}\sum_{i=0}^{L-1}v_{i_{1,1}d+i}p_{l,i}^{(1)}p_{l,i}^{(2)}\varphi_{l,i}\\\sum_{i=0}^{L-1}v_{i_{1,1}d+i}p_{l,i+L}^{(1)}p_{l,i+L}^{(2)}\varphi_{l,i+L}\end{bmatrix}\end{bmatrix} \quad l = 1,\dots,R$$

$$\dots (57)$$

where the $k^{th}$ matrix block in Equation (57) for $W^{l}_{i_{1,1},p_l^{(1)},p_l^{(2)},i_{2,1,l}}$, i.e.,

$$\theta_{p_{K-1}}\begin{bmatrix}\sum_{i=0}^{L-1}v_{i_{1,1}d+i}p_{l,i}^{(1)}p_{l,i}^{(2)}\varphi_{l,i}\\\sum_{i=0}^{L-1}v_{i_{1,1}d+i}p_{l,i+L}^{(1)}p_{l,i+L}^{(2)}\varphi_{l,i+L}\end{bmatrix},$$

corresponds to the $k^{th}$ panel where $\theta_{p_{k-1}}$ is the inter-panel co-phasing of the $k^{th}$ panel with respect to the first panel in order to achieve coherent joint precoding across panels. The $\sum_{i=0}^{L-1}v_{i_{1,1}d+i}p_{l,i}^{(1)}p_{l,i}^{(2)}\varphi_{l,i}$ is the beamforming virtu-alization coefficients of $N_1N_2$ ports for first polarized antenna elements and $\sum_{i=0}^{L-1}v_{i_{1,1}d+i}p_{l,i+L}^{(1)}p_{l,i+L}^{(2)}\varphi_{l,i+L}$ is the beamforming virtualization coefficients of $N_1N_2$ ports for second polarized antenna elements in all panels as different panels share the same beam per polarization for each layer. The coefficient $v_{i_{1,1}d+i}$ is the 2D DFT virtualization coefficient for $i^{th}$ beam, $p_{l,i}^{(1)},p_{l,i+L}^{(1)}$ and $p_{l,i}^{(2)},p_{l,i+L}^{(2)}$ are wide-band and sub-band amplitude coefficients for the $i^{th}$ beam two polarizations with respect to the strongest beam, and $\varphi_{l,i},\varphi_{l,i+L}$ are phase shift coefficients for the $i^{th}$ beam two polarizations with respect to the strongest beam. Hence, *K* blocks in $W^{l}_{i_{1,1},p_l^{(1)},p_l^{(2)},i_{2,1,l}}$ provide beamforming virtualization coefficients over *K* groups of $N_1N_2$ ports that are coherently combined to provide a joint precoder matrix for a multi panel scenario.

In the above scheme, all panels are similar in terms of the number of antennas and spacing, and are quasi co-located in terms of beams selection and employment of amplitude and phase shift coefficients for generating the combined beam. As previously discussed, however, this assumption may be unsuitable for distributed MIMO scenario or FR2 applications. To address this issue, the disclosure enables different amplitude and phase shift coefficients per panel for generating the linearly combined beam. That is, the beam per layer, per polarization and per panel is an independent linear combination of $L$ selected group of beams in which a set of $L$ beam groups is first selected to be shared across polarizations, layers and panels. The selection of those initial $L$ beams can be performed through transmission across all panels or from a specific panel. The strongest beam is then identified per layer, across both polarizations and all panels where a set of amplitude and phase shift coefficients are applied to beams accordingly with respect to the identified strongest beam. PMI reporting is accomplished by the LTE reporting $i_{1,1}$ and $i_{1,2}$ to indicate $L$ beams/beam groups, $i_{1,3,l}$ to indicate the strongest coefficient on layer $l$, $i_{1,4,l}$ to indicate wideband amplitude coefficients for layer $l$), $i_{2,1,l}$ to indicate the phase coefficient for layer $l$, and $i_{2,2,l}$ to indicate the sub-band amplitude coefficient for layer $l$. The $i$ parameters $i_{1,4,l}$, $i_{2,1,l}$ and $i_{2,2,l}$ in this scheme take $2KL$ values where $K$ is the number of panels. For each layer of transmission, there is a set of $L$ coeffeicents per polarization and per panel for each of the $i$ parameters. Alternatively, the definitions of $i_{1,4,l}$, $i_{2,1,l}$ and $i_{2,2,l}$ parameters are modified to $i_{1,4,l,k}$, $i_{2,1,l,k}$ and $i_{2,2,l,k}$ to indicate amplitude and phase shift coefficients for layer $l$ on panel $k$ where each takes $2L$ values as in the current specification for two polarizations. For consistency with the current specification, the following Equations (58) and (59) are derived to define the Type II multi-panel codebook.

$$W^{(R)}_{q_1,q_2,n_1,n_2,p_l^{(1)},p_l^{(2)},i_{2,1,R}} = \frac{1}{\sqrt{R}}\left[ W^1_{q_1,q_2,n_1,n_2,p_l^{(1)},p_l^{(2)},i_{2,1,1}} \quad \cdots \quad W^R_{q_1,q_2,n_1,n_2,p_l^{(1)},p_l^{(2)},i_{2,1,R}} \right]$$

$$\ldots\ldots(58)$$

where each column of $W^{(R)}_{q_1,q_2,n_1,n_2,p_l^{(1)},p_l^{(2)},i_{2,1,R}}$ matrix indicates the precoding coefficients for each layer of transmission. The column $l$ corresponding to precoding coefficient of layer $l$ is defined in Equation (59) as follows.

$$W^l_{q_1,q_2,n_1,n_2,p_l^{(1)},p_l^{(2)},i_{2,1,l}}$$

$$= \frac{1}{\sqrt{N_1 N_2 \sum_{i=0}^{2L-1}(p_{l,i}^{(1)}p_{l,i}^{(2)})^2}}\left[ \begin{bmatrix} \sum_{i=0}^{L-1} v_{m_1^{(i)},m_2^{(i)}} p_{l,i}^{(1)} p_{l,i}^{(2)} \varphi_{l,i} \\ \sum_{i=0}^{L-1} v_{m_1^{(i)},m_2^{(i)}} p_{l,i+L}^{(1)} p_{l,i+L}^{(2)} \varphi_{l,i+L} \\ \vdots \\ \begin{bmatrix} \sum_{i=0}^{L-1} v_{m_1^{(i)},m_2^{(i)}} p_{l,i+L(2K-2)}^{(1)} p_{l,i+L(2K-2)}^{(2)} \varphi_{l,i+L(2K-2)} \\ \sum_{i=0}^{L-1} v_{m_1^{(i)},m_2^{(i)}} p_{l,i+L(2K-1)}^{(1)} p_{l,i+L(2K-1)}^{(2)} \varphi_{l,i+L(2K-1)} \end{bmatrix} \end{bmatrix} \right] \qquad l = 1,\ldots,R$$

$$\ldots\ldots(59)$$

where the $k^{th}$ matrix block in Equation (59) for $W^l_{q_1,q_2,n_1,n_2,p_l^{(1)},p_l^{(2)},i_{2,1,l}}$, i.e.

$$\left[\begin{array}{c} \sum_{i=0}^{L-1} v_{m_1^{(i)},m_2^{(i)}} p^{(1)}_{l,i+L(2k-2)} p^{(2)}_{l,i+L(2k-2)} \varphi_{l,i+L(2k-2)} \\ \sum_{i=0}^{L-1} v_{m_1^{(i)},m_2^{(i)}} p^{(1)}_{l,i+L(2k-1)} p^{(2)}_{l,i+L(2k-1)} \varphi_{l,i+L(2k-1)} \end{array}\right],$$

corresponds to the $k^{th}$ panel where $p^{(1)}_{l,i+L(2k-2)}$ and $p^{(2)}_{l,i+L(2k-2)}$ $k = 1,..,K$ are wide-band and sub-band amplitude coefficients for the $i^{th}$ beam of the $k^{th}$ panel for first polarized antenna elements, $p^{(1)}_{l,i+L(2k-1)}$ and $p^{(2)}_{l,i+L(2k-1)}$ $k = 1,..,K$ are wide-band and sub-band amplitude coefficients for the $i^{th}$ beam of the $k^{th}$ panel for second polarized antenna elements, $\varphi_{l,i+L(2k-2)}$, $\varphi_{l,i+L(2k-1)}$ $k = 1,..,K$ are phase shift coefficients for the $i^{th}$ beam of the $k^{th}$ panel for first and second polarized antenna elements, respectively, and $v_{m_1^{(i)},m_2^{(i)}}$ is the 2D DFT virtualization coefficient for the $i^{th}$ beam. The $\sum_{i=0}^{L-1} v_{m_1^{(i)},m_2^{(i)}} p^{(1)}_{l,i+L(2k-2)} p^{(2)}_{l,i+L(2k-2)} \varphi_{l,i+L(2k-2)}$ are the beamforming virtualization coefficients of $N_1 N_2$ ports in the $k^{th}$ panel for the first polarized antenna elements and $\sum_{i=0}^{L-1} v_{m_1^{(i)},m_2^{(i)}} p^{(1)}_{l,i+L(2k-1)} p^{(2)}_{l,i+L(2k-1)} \varphi_{l,i+L(2k-1)}$ are the beamforming virtualization coefficients of $N_1 N_2$ ports in the $k^{th}$ panel for the second polarized antenna elements. Hence, for each layer of transmission, the $L$ selected beams are combined with different sets of amplitude and phase shift coefficients per polarization in each panel.

Similarly, for the Type II port selection, the enhanced multi-panel codebook design is defined in Equations (60) and (61) as follows.

$$W^{(R)}_{i_{1,1},p_l^{(1)},p_l^{(2)},i_{2,1,R}} = \frac{1}{\sqrt{R}}\left[W^1_{i_{1,1},p_l^{(1)},p_l^{(2)},i_{2,1,1}} \quad \cdots \quad W^R_{i_{1,1},p_l^{(1)},p_l^{(2)},i_{2,1,R}}\right]$$

$$.....(60)$$

where

$$W^l_{i_{1,1},p_l^{(1)},p_l^{(2)},i_{2,1,l}} = \frac{1}{\sqrt{\sum_{i=0}^{2L-1}(p_{l,i}^{(1)} p_{l,i}^{(2)})^2}} \left[\begin{array}{c} \left[\begin{array}{c} \sum_{i=0}^{L-1} v_{i_{1,1}d+i} p_{l,i}^{(1)} p_{l,i}^{(2)} \varphi_{l,i} \\ \sum_{i=0}^{L-1} v_{i_{1,1}d+i} p_{l,i+L}^{(1)} p_{l,i+L}^{(2)} \varphi_{l,i+L} \end{array}\right] \\ \vdots \\ \left[\begin{array}{c} \sum_{i=0}^{L-1} v_{i_{1,1}d+i} p_{l,i+L(2K-2)}^{(1)} p_{l,i+L(2K-2)}^{(2)} \varphi_{l,i+L(2K-2)} \\ \sum_{i=0}^{L-1} v_{i_{1,1}d+i} p_{l,i+L(2K-1)}^{(1)} p_{l,i+L(2K-1)}^{(2)} \varphi_{l,i+L(2K-1)} \end{array}\right] \end{array}\right] \quad l$$

$$= 1,...,R$$

$$.....(61)$$

where the $k^{th}$ matrix block in Equation (61) for $W^l_{i_{1,1},p_l^{(1)},p_l^{(2)},i_{2,1,l}}$ , i.e.

$$\begin{bmatrix} \sum_{i=0}^{L-1} v_{i_{1,1}d+i} p^{(1)}_{l,i+L(2k-2)} p^{(2)}_{l,i+L(2k-2)} \varphi_{l,i+L(2k-2)} \\ \sum_{i=0}^{L-1} v_{i_{1,1}d+i} p^{(1)}_{l,i+L(2k-1)} p^{(2)}_{l,i+L(2k-1)} \varphi_{l,i+L(2k-1)} \end{bmatrix},$$

corresponds to the $k^{th}$ panel where $p^{(1)}_{l,i+L(2k-2)}$ and $p^{(2)}_{l,i+L(2k-2)}$ $k = 1,.., K$ are wide-band and sub-band amplitude coefficients for the $i^{th}$ beam of the $k^{th}$ panel for first polarized antenna elements, $p^{(1)}_{l,i+L(2k-1)}$ and $p^{(2)}_{l,i+L(2k-1)}$ $k = 1,..,K$ are wide-band and sub-band amplitude coefficients for the $i^{th}$ beam of the $k^{th}$ panel for second polarized antenna elements, $\varphi_{l,i+L(2k-2)}$, $\varphi_{l,i+L(2k-1)}$ $k = 1,.., K$ are phase shift coefficients for the $i^{th}$ beam of the $k^{th}$ panel for first and second polarized antenna elements, respectively, and $v_{i1,1d+i}$ is the 2D DFT virtualization coefficient for the $i^{th}$ beam. The $\sum_{i=0}^{L-1} v_{i_{1,1}d+i} p^{(1)}_{l,i+L(2k-2)} p^{(2)}_{l,i+L(2k-2)} \varphi_{l,i+L(2k-2)}$ are the beamforming virtualization coefficients of $N_1N_2$ ports in the $k^{th}$ panel for the first polarized antenna elements and $\sum_{i=0}^{L-1} v_{i_{1,1}d+i} p^{(1)}_{l,i+L(2k-1)} p^{(2)}_{l,i+L(2k-1)} \varphi_{l,i+L(2k-1)}$ are the beamforming virtualization coefficients of $N_1N_2$ ports in the $k^{th}$ panel for the second polarized antenna elements. Hence, for each layer of transmission, the $L$ selected beams are combined with different sets of amplitude and phase shift coefficients per polarization in each panel.

In the above-disclosed scheme, the assignment of amplitude and phase shift coefficients is with respect to the strongest beam which is identified per layer across both polarizations and all panels. This may create substantial signaling overhead as a result of a PMI reporting requirement of $2KL$ coefficients for each of the $i_{1,4,l}$, $i_{2,1,l}$ and $i_{2,2,l}$ parameters.

An alternative scheme with significantly reduced signaling overhead yet using independent beams per panel is to assign amplitude and phase shift coefficients per panel with respect to the strongest beam in that panel. In this scheme, a set of $L$ beam groups are first selected to be shared across polarizations, layers and panels. The selection of those initial $L$ beams can be performed through transmission across all panels or from a specific panel The strongest beam is then identified per layer and per panel, across both polarizations where a set of amplitude and phase shift coefficients are applied to beams accordingly per panel with respect to the identified strongest beam in that panel. PMI reporting is accomplished by the UE reporting $i_{1,1}$ and $i_{1,2}$ to indicate $L$ beams/beam groups, $i_{1,3,l}$ to indicate the strongest coefficient on layer $l$, $i_{1,4,l}$ to indicate wideband amplitude coefficients for layer $l$, $i_{2,1,l}$ to indicate the phase coefficient for layer $l$, and $i_{2,2,l}$ to indicate the sub-band amplitude coefficient for layer $l$. In this scheme, the $i_{1,3,l}$ parameter takes $K$ values where $K$ is the number of panels. That is, for each layer of transmission, there are $K$ identified strongest beams, one per panel. The definition of $i_{1,3,l}$ can be modified to $i_{1,3,l,k}$ to indicate the strongest beam for layer $l$ on panel $k$. In this scheme, the Type II multi-panel codebook is defined in Equation (62) as follows.

$$W^{(R)}_{q_1,q_2,n_1,n_2,p_l^{(1)},p_l^{(2)},i_{2,1,R}} = \frac{1}{\sqrt{R}}\begin{bmatrix} W^1_{q_1,q_2,n_1,n_2,p_l^{(1)},p_l^{(2)},i_{2,1,1}} & \cdots & W^R_{q_1,q_2,n_1,n_2,p_l^{(1)},p_l^{(2)},i_{2,1,R}} \end{bmatrix},$$

$$.....(62)$$

In Equation (62), each column of $W^{(R)}_{q_1,q_2,n_1,n_2,p_l^{(1)},p_l^{(2)},i_{2,1,R}}$ matrix indicates the precoding coefficients for each layer of transmission. The column $l$ corresponding to precoding coefficient of layer $l$ is defined in Equation (63) as follows.

$$W^l_{q_1,q_2,n_1,n_2,p_l^{(1)},p_l^{(2)},i_{2,1,l}} = \frac{1}{\sqrt{N_1 N_2 \sum_{i=0}^{2L-1}(p_{l,i}^{(1)} p_{l,i}^{(2)})^2}} \left[ \begin{array}{c} \left[ \begin{array}{c} \sum_{i=0}^{L-1} v_{m_1^{(i)},m_2^{(i)}} p_{l,i}^{(1,1)} p_{l,i}^{(2,1)} \varphi_{l,i}^{(1)} \\ \sum_{i=0}^{L-1} v_{m_1^{(i)},m_2^{(i)}} p_{l,i+L}^{(1,1)} p_{l,i+L}^{(2,1)} \varphi_{l,i+L}^{(1)} \end{array} \right] \\ \vdots \\ \left[ \begin{array}{c} \sum_{i=0}^{L-1} v_{m_1^{(i)},m_2^{(i)}} p_{l,i}^{(1,K)} p_{l,i}^{(2,K)} \varphi_{l,i}^{(K)} \\ \sum_{i=0}^{L-1} v_{m_1^{(i)},m_2^{(i)}} p_{l,i+L}^{(1,K)} p_{l,i+L}^{(2,K)} \varphi_{l,i+L}^{(K)} \end{array} \right] \end{array} \right] \qquad l$$

$$= 1, \ldots, R$$

$$\ldots\ldots(63)$$

where the $k^{th}$ matrix block in Equation (63) for $W^l_{q_1,q_2,n_1,n_2,p_l^{(1)},p_l^{(2)},i_{2,1,l}}$, i.e.,

$$\left[ \begin{array}{c} \sum_{i=0}^{L-1} v_{m_1^{(i)},m_2^{(i)}} p_{l,i}^{(1,k)} p_{l,i}^{(2,k)} \varphi_{l,i}^{(k)} \\ \sum_{i=0}^{L-1} v_{m_1^{(i)},m_2^{(i)}} p_{l,i+L}^{(1,k)} p_{l,i+L}^{(2,k)} \varphi_{l,i+L}^{(k)} \end{array} \right],$$

corresponds to the $k^{th}$ panel where $p_{l,i}^{(1,k)}$ and $p_{l,i}^{(2,k)}$ $k = 1,..,K$ are wide-band and sub-band amplitude coefficients for the $i^{th}$ beam of $k^{th}$ panel for the first polarized antenna elements with respect to the strongest beam on panel $k$, $p_{l,i+L}^{(1,k)}$ and $p_{l,i+L}^{(2,k)}$ $k = 1,..,K$ are wide-band and sub-band amplitude coefficients for the $i^{th}$ beam of $k^{th}$ panel for the second polarized antenna elements with respect to the strongest beam on panel $k$, $\varphi_{l,i}^{(k)}, \varphi_{l,i+L}^{(k)}$ $k = 1,..,K$ are phase shift coefficients for the $i^{th}$ beam of the $k^{th}$ panel for the first and second polarized antenna elements with respect to the strongest beam on panel $k$, respectively, and $v_{m_1^{(i)},m_2^{(i)}}$ is the 2D DFT virtualization coefficient for the $i^{th}$ beam.

The $\sum_{i=0}^{L-1} v_{m_1^{(i)},m_2^{(i)}} p_{l,i}^{(1,k)} p_{l,i}^{(2,k)} \varphi_{l,i}^{(k)}$ are the beamforming virtualization coefficients of $N_1 N_2$ ports in the $k^{th}$ panel for first polarized antenna elements and $\sum_{i=0}^{L-1} v_{m_1^{(i)},m_2^{(i)}} p_{l,i+L}^{(1,k)} p_{l,i+L}^{(2,k)} \varphi_{l,i+L}^{(k)}$ are the beamforming virtualization coefficients of $N_1 N_2$ ports in the $k^{th}$ panel for the second polarized antenna elements.

Similarly, for the Type II port selection, the enhanced multi-panel codebook design is defined in Equations (64) and (65) as follows.

$$W^{(R)}_{i_{1,1},p_l^{(1)},p_l^{(2)},i_{2,1},R} = \frac{1}{\sqrt{R}} \left[ W^1_{i_{1,1},p_l^{(1)},p_l^{(2)},i_{2,1},1} \quad \cdots \quad W^R_{i_{1,1},p_l^{(1)},p_l^{(2)},i_{2,1},R} \right]$$

$$\ldots\ldots(64)$$

where

$$W^l_{i_{1,1},p_l^{(1)},p_l^{(2)},i_{2,1},l} = \frac{1}{\sqrt{\sum_{i=0}^{2L-1}(p_{l,i}^{(1)} p_{l,i}^{(2)})^2}} \begin{bmatrix} \begin{bmatrix} \sum_{i=0}^{L-1} v_{i_{1,1}d+i} p_{l,i}^{(1,1)} p_{l,i}^{(2,1)} \varphi_{l,i}^{(1)} \\ \sum_{i=0}^{L-1} v_{i_{1,1}d+i} p_{l,i+L}^{(1,1)} p_{l,i+L}^{(2,1)} \varphi_{l,i+L}^{(1)} \end{bmatrix} \\ \vdots \\ \begin{bmatrix} \sum_{i=0}^{L-1} v_{i_{1,1}d+i} p_{l,i}^{(1,K)} p_{l,i}^{(2,K)} \varphi_{l,i}^{(K)} \\ \sum_{i=0}^{L-1} v_{i_{1,1}d+i} p_{l,i+L}^{(1,K)} p_{l,i+L}^{(2,K)} \varphi_{l,i+L}^{(K)} \end{bmatrix} \end{bmatrix} \quad l = 1, \ldots, R$$

$$\ldots\ldots(65)$$

where the $k^{th}$ matrix block in Equation (65) for $W^l_{i_{1,1},p_l^{(1)},p_l^{(2)},i_{2,1},l}$, i.e.,

$$\begin{bmatrix} \sum_{i=0}^{L-1} v_{i_{1,1}d+i} p_{l,i}^{(1,k)} p_{l,i}^{(2,k)} \varphi_{l,i}^{(k)} \\ \sum_{i=0}^{L-1} v_{i_{1,1}d+i} p_{l,i+L}^{(1,k)} p_{l,i+L}^{(2,k)} \varphi_{l,i+L}^{(k)} \end{bmatrix},$$

corresponds to the $k^{th}$ panel where $p_{l,i}^{(1,k)}$ and $p_{l,i}^{(2,k)}$ $k = 1,.., K$ are wide-band and sub-band amplitude coefficients for the $i^{th}$ beam of the $k^{th}$ panel for first polarized antenna elements with respect to the strongest beam on panel $k$, $p_{l,i+L}^{(1,k)}$ and $p_{l,i+L}^{(2,k)}$ $k = 1,.., K$ are wide-band and sub-band amplitude coefficients for the $i^{th}$ beam of the $k^{th}$ panel for the second polarized antenna elements with respect to the strongest beam on panel $k$, $\varphi_{l,i}^{(k)}, \varphi_{l,i+L}^{(k)}$ $k = 1,.., K$ are phase shift coefficients for the $i^{th}$ beam of the $k^{th}$ panel for first and second polarized antenna elements with respect to the strongest beam on panel $k$, respectively, and, and $v_{i_{1,1}d+i}$ is the 2D DFT virtualization coefficient for the $i^{th}$ beam.

The $\sum_{i=0}^{L-1} v_{i_{1,1}d+i} p_{l,i}^{(1,k)} p_{l,i}^{(2,k)} \varphi_{l,i}^{(k)}$ are the beamforming virtualization coefficients of $N_1 N_2$ ports in the $k^{th}$ panel for the first polarized antenna elements and $\sum_{i=0}^{L-1} v_{i_{1,1}d+i} p_{l,i+L}^{(1,k)} p_{l,i+L}^{(2,k)} \varphi_{l,i+L}^{(k)}$ are the beamforming virtualization coefficients of $N_1N_2$ ports in the $k^{th}$ panel for the second polarized antenna elements.

Another approach is to allow different initial L beam selections per different panel. In this scheme, the signaling overhead is reduced by defining only one set of the amplitude and phase shift coefficients applicable to different panels as these coefficients scale the other beams with respect to the strongest beam in each panel. Specifically, different beams are generated per layer, per polarization and per panel using a linear combination of $L$ specific selected beams/beam groups per panel using one set of amplitude and phase shift coefficients. In this scheme, there are a total of $KL$ beams/groups of beam selections for $K$ panels (i.e., $L$ beams per panel). PMI reporting is accomplished by the LTE reporting $i_{1,1}$ and $i_{1,2}$ to indicate $KL$ beams/beam groups, $i_{1,3,l}$ to indicate the strongest coefficient on layer $l$, $i_{1,4,l}$ to indicate wideband amplitude coefficients for layer $l$, $i_{2,1,l}$ to indicate the phase coefficient for layer $l$, and $i_{2,2,l}$ to indicate the sub-band amplitude coefficient for layer $l$. In this scheme, each $i_{1,1}$, $i_{1,2}$ and $i_{1,3,l}$ parameter takes $K$ values where $K$ is the number of panels. That is, for each layer of transmission, there are $K$ sets of $L$ selected beams and $K$ identified strongest beams (i.e., one per panel). The definition of $i_{1,1}$, $i_{1,2}$ and $i_{1,3,l}$ can be modified to $i_{1,1,k}$, $i_{1,2,k}$ and $i_{1,3,l,k}$ to indicate the beams for layer $l$ on panel $k$. The Type II multi-panel codebook is defined in Equation (66) as follows.

$$W^{(R)}_{q_1,q_2,n_1,n_2,p_l^{(1)},p_l^{(2)},i_{2,1,R}} = \frac{1}{\sqrt{R}}\left[ W^{1}_{q_1,q_2,n_1,n_2,p_l^{(1)},p_l^{(2)},i_{2,1,1}} \quad \cdots \quad W^{R}_{q_1,q_2,n_1,n_2,p_l^{(1)},p_l^{(2)},i_{2,1,R}} \right],$$

$$\ldots\ldots(66)$$

where each column of $W^{(R)}_{q_1,q_2,n_1,n_2,p_l^{(1)},p_l^{(2)},i_{2,1,R}}$ matrix indicates the precoding coefficients for each layer of transmission. The column $l$ corresponding to precoding coefficient of layer $l$ is defined in Equation (67) as follows.

$$W^{l}_{q_1,q_2,n_1,n_2,p_l^{(1)},p_l^{(2)},i_{2,1,l}} = \frac{1}{\sqrt{N_1 N_2 \sum_{i=0}^{2L-1}(p_{l,i}^{(1)} p_{l,i}^{(2)})^2}} \begin{bmatrix} \begin{bmatrix} \sum_{i=0}^{L-1} v_{m_1^{(i)},m_2^{(i)}} p_{l,i}^{(1,1)} p_{l,i}^{(2,1)} \varphi_{l,i}^{(1)} \\ \sum_{i=0}^{L-1} v_{m_1^{(i)},m_2^{(i)}} p_{l,i+L}^{(1,1)} p_{l,i+L}^{(2,1)} \varphi_{l,i+L}^{(1)} \end{bmatrix} \\ \vdots \\ \begin{bmatrix} \sum_{i=(K-1)L}^{KL-1} v_{m_1^{(i)},m_2^{(i)}} p_{l,i}^{(1,K)} p_{l,i}^{(2,K)} \varphi_{l,i}^{(K)} \\ \sum_{i=(K-1)L}^{KL-1} v_{m_1^{(i)},m_2^{(i)}} p_{l,i+L}^{(1,K)} p_{l,i+L}^{(2,K)} \varphi_{l,i+L}^{(K)} \end{bmatrix} \end{bmatrix} \qquad l$$

$$= 1, \ldots, R$$

$$\ldots\ldots(67)$$

where the $k^{th}$ matrix block in Equation (67) for $W^{l}_{q_1,q_2,n_1,n_2,p_l^{(1)},p_l^{(2)},i_{2,1,l}}$, i.e.,

$$
\begin{bmatrix}
\sum_{i=(K-1)L}^{KL-1} v_{m_1^{(i)},m_2^{(i)}} p_{l,i}^{(1,K)} p_{l,i}^{(2,K)} \varphi_{l,i}^{(K)} \\
\sum_{i=(K-1)L}^{KL-1} v_{m_1^{(i)},m_2^{(i)}} p_{l,i+L}^{(1,K)} p_{l,i+L}^{(2,K)} \varphi_{l,i+L}^{(K)}
\end{bmatrix},
$$

corresponds to the $k^{th}$ panel where $p_{l,i}^{(1,k)}$ and $p_{l,i}^{(2,k)}$ $k = 1,..,K$ are wide-band and sub-band amplitude coefficients for the $i^{th}$ beam of the $k^{th}$ panel for the first polarized antenna elements with respect to the strongest beam on panel $k$,

$p_{l,i+L}^{(1,k)}$ and $p_{l,i+L}^{(2,k)}$ $k = 1,..,K$ are wide-band and sub-band amplitude coefficients for the $i^{th}$ beam of the $k^{th}$ panel for the second polarized antenna elements with respect to the strongest beam on panel $k$, $\varphi_{l,i}^{(k)}, \varphi_{l,i+L}^{(k)}$ $k = 1,..,K$ are phase shift coefficients for the $i^{th}$ beam of the $k^{th}$ panel for the first and second polarized antenna elements with respect to the strongest beam on panel $k$, respectively, and $v_{m_1^{(i)},m_2^{(i)}}$ is the 2D DFT virtualization coefficient for the

$i^{th}$ beam. The $\sum_{i=(k-1)L}^{kL-1} v_{m_1^{(i)},m_2^{(i)}} p_{l,i}^{(1,k)} p_{l,i}^{(2,k)} \varphi_{l,i}^{(k)}$ are the beamforming virtualization coefficients of $N_1N_2$ ports in the $k^{th}$ panel for the first polarized antenna elements that is derived by linear combination of $((k - 1)L)^{th}$ to $(kL - 1)^{th}$

beams using $p_{l,i}^{(1,k)}, p_{l,i}^{(2,k)}$ and $\varphi_{l,i}^{(k)}$ coefficients and $\sum_{i=(k-1)L}^{kL-1} v_{m_1^{(i)},m_2^{(i)}} p_{l,i+L}^{(1,k)} p_{l,i+L}^{(2,k)} \varphi_{l,i+L}^{(k)}$ are the beam-
forming virtualization coefficients of $N_1N_2$ ports in the $k^{th}$ panel for the second polarized antenna elements that are derived by linear combination of $((k - 1)L)^{th}$ to $(kL - 1)^{th}$ beams using $p_{l,i+L}^{(1,k)}, p_{l,i+L}^{(2,k)}$ and $\varphi_{l,i+L}^{(k)}$ coefficients.

Similarly, for the Type II port selection, the enhanced multi-panel codebook design is defined in Equations (68) and (69) as follows.

$$
W_{i_{1,1},p_l^{(1)},p_l^{(2)},i_{2,1,R}}^{(R)} = \frac{1}{\sqrt{R}} \left[ W_{i_{1,1},p_l^{(1)},p_l^{(2)},i_{2,1,1}}^{1} \quad \cdots \quad W_{i_{1,1},p_l^{(1)},p_l^{(2)},i_{2,1,R}}^{R} \right]
$$

$$....(68)$$

where

$$
W^l_{i_{1,1},p^{(1)}_l,p^{(2)}_l,i_{2,1,l}} = \frac{1}{\sqrt{\sum_{i=0}^{2L-1}(p^{(1)}_{l,i}p^{(2)}_{l,i})^2}}
\begin{bmatrix}
\begin{bmatrix}
\sum_{i=0}^{L-1} v_{i_{1,1}d+i}\, p^{(1,1)}_{l,i}\, p^{(2,1)}_{l,i}\, \varphi^{(1)}_{l,i} \\
\sum_{i=0}^{L-1} v_{i_{1,1}d+i}\, p^{(1,1)}_{l,i+L}\, p^{(2,1)}_{l,i+L}\, \varphi^{(1)}_{l,i+L}
\end{bmatrix} \\
\vdots \\
\begin{bmatrix}
\sum_{i=(K-1)L}^{KL-1} v_{i_{1,1}d+i}\, p^{(1,K)}_{l,i}\, p^{(2,K)}_{l,i}\, \varphi^{(K)}_{l,i} \\
\sum_{i=(K-1)L}^{KL-1} v_{i_{1,1}d+i}\, p^{(1,K)}_{l,i+L}\, p^{(2,K)}_{l,i+L}\, \varphi^{(K)}_{l,i+L}
\end{bmatrix}
\end{bmatrix}
\qquad l = 1,\dots,R
$$

.....(69)

where the $k^{th}$ matrix block in Equation (69) for $W^l_{i_{1,1},p^{(1)}_l,p^{(2)}_l,i_{2,1,l}}$, i.e.

$$
\begin{bmatrix}
\sum_{i=(k-1)L}^{kL-1} v_{i_{1,1}d+i}\, p^{(1,k)}_{l,i}\, p^{(2,k)}_{l,i}\, \varphi^{(k)}_{l,i} \\
\sum_{i=(k-1)L}^{kL-1} v_{i_{1,1}d+i}\, p^{(1,k)}_{l,i+L}\, p^{(2,k)}_{l,i+L}\, \varphi^{(k)}_{l,i+L}
\end{bmatrix},
$$

corresponds to the $k^{th}$ panel where $p^{(1,k)}_{l,i}$ and $p^{(2,k)}_{l,i}$ $k = 1,..,K$ are wide-band and sub-band amplitude coefficients for the $i^{th}$ beam of the $k^{th}$ panel for the first polarized antenna elements with respect to the strongest beam on panel $k$, $p^{(1,k)}_{l,i+L}$ and $p^{(2,k)}_{l,i+L}$ $k = 1,..,K$ are wide-band and sub-band amplitude coefficients for the $i^{th}$ beam of the $k^{th}$ panel for the second polarized antenna elements with respect to the strongest beam on panel $k$, $\varphi^{(k)}_{l,i}, \varphi^{(k)}_{l,i+L}$ $k = 1,..,K$ are phase shift coefficients for the $i^{th}$ beam of the $k^{th}$ panel for the first and second polarized antenna elements with respect to the strongest beam on panel $k$, respectively, and $v_{i_{1,1}d+i}$ is the 2D DFT virtualization coefficient for the $i^{th}$ beam.

The $\sum_{i=(k-1)L}^{kL-1} v_{i_{1,1}d+i}\, p^{(1,k)}_{l,i}\, p^{(2,k)}_{l,i}\, \varphi^{(k)}_{l,i}$ are the beamforming virtualization coefficients of $N_1N_2$ ports in the $k^{th}$ panel for the first polarized antenna elements that are derived by linear combination of $((k-1)L)^{th}$ to $(kL-1)^{th}$ beams using $p^{(1,k)}_{l,i}$, $p^{(2,k)}_{l,i}$ and $\varphi^{(k)}_{l,i}$ coefficients and $\sum_{i=(k-1)L}^{kL-1} v_{i_{1,1}d+i}\, p^{(1,k)}_{l,i+L}\, p^{(2,k)}_{l,i+L}\, \varphi^{(k)}_{l,i+L}$ are the beamforming virtualization coefficients of $N_1N_2$ ports in the $k^{th}$ panel for the second polarized antenna elements that are derived by linear combination of $((k-1)L)^{th}$ to $(kL-1)^{th}$ beams using $p^{(1,k)}_{l,i+L}, p^{(2,k)}_{l,i+L}$ and $\varphi^{(k)}_{l,i+L}$ coefficients.

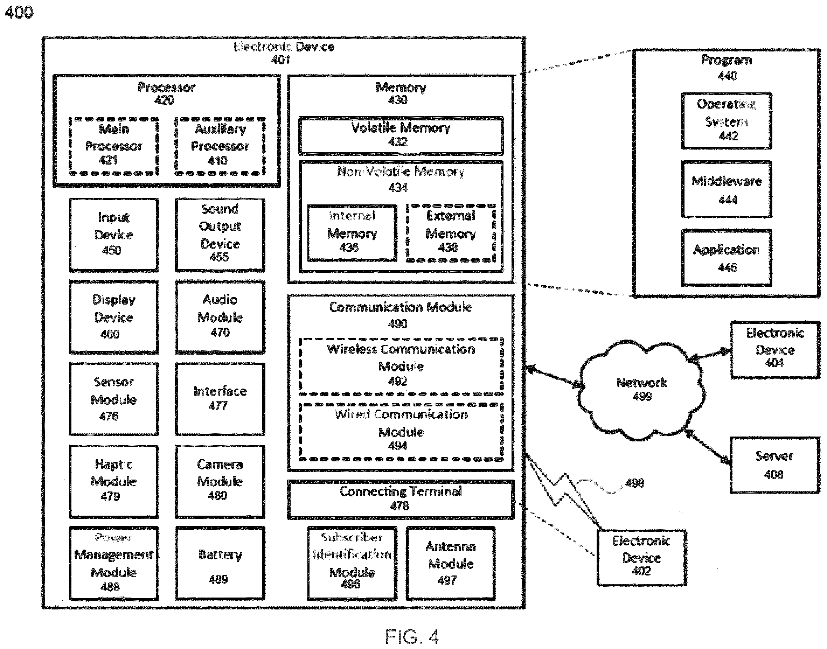

FIG. 4 is a block diagram of an electronic device in a network environment 400, according to an embodiment. Referring to FIG. 4, an electronic device 401 in a network environment 400 may communicate with an electronic device 402 via a first network 498 (e.g., a short-range wireless communication network), or an electronic device 404 or a server 408 via a second network 499 (e.g., a long-range wireless communication network). The electronic device 401 may communicate with the electronic device 404 via the server 408. The electronic device 401 may include a processor 420, a memory 430, an input device 440, a sound output device 455, a display device 460, an audio module 470, a sensor module 476, an interface 477, a haptic module 479, a camera module 480, a power management module 488, a battery 489, a communication module 490, a subscriber identification module (SIM) card 496, or an antenna module 494. In one embodiment, at least one (e.g., the display device 460 or the camera module 480) of the components may be omitted from the electronic device 401, or one or more other components may be added to the electronic device 401. Some of the components may be implemented as a single integrated circuit (IC). For example, the sensor module 476 (e.g., a fingerprint sensor, an iris sensor, or an illuminance sensor) may be embedded in the display device 460 (e.g., a display).

The processor 420 may execute, for example, software (e.g., a program 440) to control at least one other component (e.g., a hardware or a software component) of the electronic device 401 coupled with the processor 420 and may perform various data processing or computations, such as for CSI in multi-TRP CJT as disclosed herein. As at least part of the data processing or computations, the processor 420 may load a command or data received from another component (e.g., the sensor module 446 or the communication module 490) in volatile memory 432, process the command or the data stored in the volatile memory 432, and store resulting data in non-volatile memory 434. The processor 420 may include a main processor 421 (e.g., a central processing unit (CPU) or an application processor (AP)), and an auxiliary processor 423 (e.g., a graphics processing unit (GPU), an image signal processor (ISP), a sensor hub processor, or a communication processor(CP)) that is operable independently from, or in conjunction with, the main processor 421. Additionally or alternatively, the auxiliary processor 423 may be adapted to consume less power than the main processor 421, or execute a particular function. The auxiliary processor 423 may be implemented as being separate from, or a part of, the main processor 421.

The auxiliary processor 423 may control at least some of the functions or states related to at least one component (e.g., the display device 460, the sensor module 476, or the communication module 490) among the components of the electronic device 401, instead of the main processor 421 while the main processor 421 is in an inactive (e.g., sleep) state, or together with the main processor 421 while the main processor 421 is in an active state (e.g., executing an application). The auxiliary processor 423 (e.g., an image signal processor or a communication processor) may be implemented as part of another component (e.g., the camera module 480 or the communication module 490) functionally related to the auxiliary processor 423.

The memory 430 may store various data used by at least one component (e.g., the processor 420 or the sensor module 476) of the electronic device 401. The various data may include, for example, software (e.g., the program 440) and input data or output data for a command related thereto. The memory 430 may include the volatile memory 432 or the non-volatile memory 434.

The program 440 may be stored in the memory 430 as software, and may include, for example, an operating system (OS) 442, middleware 444, or an application 446.

The input device 450 may receive a command or data to be used by another component (e.g., the processor 420) of the electronic device 401, from the outside (e.g., a user) of the electronic device 401. The input device 450 may include, for example, a microphone, a mouse, or a keyboard.

The sound output device 455 may output sound signals to the outside of the electronic device 401. The sound output device 455 may include, for example, a speaker or a receiver. The speaker may be used for general purposes, such as playing multimedia or recording, and the receiver may be used for receiving an incoming call. The receiver may be implemented as being separate from, or a part of, the speaker.

The display device 460 may visually provide information to the outside (e.g., a user) of the electronic device 401. The display device 460 may include, for example, a display, a hologram device, or a projector and control circuitry to control a corresponding one of the display, hologram device, and projector. The display device 460 may include touch circuitry adapted to detect a touch, or sensor circuitry (e.g., a pressure sensor) adapted to measure the intensity of force incurred by the touch.

The audio module 470 may convert a sound into an electrical signal and vice versa. The audio module 470 may obtain the sound via the input device 450 or output the sound via the sound output device 455 or a headphone of an external electronic device 402 directly (e.g., wired) or wirelessly coupled with the electronic device 401.

The sensor module 476 may detect an operational state (e.g., power or temperature) of the electronic device 401 or an environmental state (e.g., a state of a user) external to the electronic device 401, and then generate an electrical signal or data value corresponding to the detected state. The sensor module 476 may include, for example, a gesture sensor, a gyro sensor, an atmospheric pressure sensor, a magnetic sensor, an acceleration sensor, a grip sensor, a proximity sensor, a color sensor, an infrared (IR) sensor, a biometric sensor, a temperature sensor, a humidity sensor, or an illuminance sensor.

The interface 477 may support one or more specified protocols to be used for the electronic device 401 to be coupled with the external electronic device 402 directly (e.g., wired) or wirelessly. The interface 477 may include, for example, a high- definition multimedia interface (HDMI), a universal serial bus (USB) interface, a secure digital (SD) card interface, or an audio interface.

A connecting terminal 478 may include a connector via which the electronic device 401 may be physically connected with the external electronic device 402. The connecting terminal 478 may include, for example, an HDMI connector, a USB connector, an SD card connector, or an audio connector (e.g., a headphone connector).

The haptic module 479 may convert an electrical signal into a mechanical stimulus (e.g., a vibration or a movement) or an electrical stimulus which may be recognized by a user via tactile sensation or kinesthetic sensation. The haptic module 479 may include, for example, a motor, a piezoelectric element, or an electrical stimulator.

The camera module 480 may capture a still image or moving images. The camera module 480 may include one or more lenses, image sensors, image signal processors, or flashes.

The power management module 488 may manage power supplied to the electronic device 401. The power management module 488 may be implemented as at least part of, for example, a power management integrated circuit (PMIC).

The battery 489 may supply power to at least one component of the electronic device 401. The battery 489 may include, for example, a primary cell which is not rechargeable, a secondary cell which is rechargeable, or a fuel cell.

The communication module 490 may support establishing a direct (e.g., wired) communication channel or a wireless communication channel between the electronic device 401 and the external electronic device (e.g., the electronic device 402, the electronic device 404, or the server 408) and performing communication via the established communication channel. The communication module 490 may include one or more communication processors that are operable independently from the processor 420 (e.g., the AP) and supports a direct (e.g., wired) communication or a wireless communication. The communication module 490 may include a wireless communication module 492 (e.g., a cellular communication module, a short-range wireless communication module, or a global navigation satellite system (GNSS) communication module) or a wired communication module 494 (e.g., a local area network (LAN) communication module or a power line communication (PLC) module). A corresponding one of these communication modules may communicate with the external electronic device via the first network 498 (e.g., a short-range communication network, such as Bluetooth™, wireless-fidelity (Wi-Fi) direct, or a standard of the Infrared Data Association (IrDA)) or the second network 499 (e.g., a long-range communication network, such as a cellular network, the Internet, or a computer network (e.g., LAN or wide area network (WAN)). These various types of communication modules may be implemented as a single component (e.g., a single IC), or may be implemented as multiple components (e.g., multiple ICs) that are separate from each other. The wireless communication module 492 may identify and authenticate the electronic device 401 in a communication network, such as the first network 498 or the second network 499, using subscriber information (e.g., international mobile subscriber identity (IMSI)) stored in the subscriber identification module 496.

The antenna module 497 may transmit or receive a signal or power to or from the outside (e.g., the external electronic device) of the electronic device 401. The antenna module 497 may include one or more antennas, and, therefrom, at least one antenna appropriate for a communication scheme used in the communication network, such as the first network 498 or the second network 499, may be selected, for example, by the communication module 490 (e.g., the wireless communication module 492). The signal or the power may then be transmitted or received between the communication module 490 and the external electronic device via the selected at least one antenna.

Commands or data may be transmitted or received between the electronic device 401 and the external electronic device 404 via the server 408 coupled with the second network 499. Each of the electronic devices 402 and 404 may be a device of a same type as, or a different type, from the electronic device 401. All or some of operations to be executed at the electronic device 401 may be executed at one or more of the external electronic devices 402, 404, or 408. For example, if the electronic device 401 should perform a function or a service automatically, or in response to a request from a user or another device, the electronic device 401, instead of, or in addition to, executing the function or the service, may request the one or more external electronic devices to perform at least part of the function or the service. The one or more external electronic devices receiving the request may perform the at least part of the function or the service requested, or an additional function or an additional service related to the request and transfer an outcome of the performing to the electronic device 401. The electronic device 401 may provide the outcome, with or without further processing of the outcome, as at least part of a reply to the request. To that end, a cloud computing, distributed computing, or client-server computing technology may be used, for example.

While the present disclosure has been described with reference to certain embodiments, various changes may be made without departing from the spirit and the scope of the disclosure, which is defined, not by the detailed description and embodiments, but by the appended claims.

**Claims**

**1.** A method, comprising:

enabling, for channel state information, CSI, acquisition by a user equipment, UE, in multiple transmission/reception point, TRP, coherent joint transmission, CJT, different beam selections in each panel of a type 1 multiple panel codebook; and

applying multiple input multiple output, MIMO, precoding to the multiple panels.

2. The method of claim 1,
wherein the MIMO precoding is configured to provide short term frequency selective information of channel characteristics over the multiple panels.

3. The method of claim 1 or 2,
wherein the MIMO precoding is based on a precoder matrix having a priority rule including an order of the different polarization transmissions, multiple panel transmissions, and multiple beam transmissions.

4. A user equipment, UE, comprising:

at least one processor; and
at least one memory operatively connected with the at least one processor, the at least one memory storing instructions, which when executed, instruct the at least one processor to perform the method according to any one of claims 1 to 3.

5. A method, comprising:

enabling, for channel state information, CSI, acquisition by a user equipment, UE, in multiple transmission/reception point, TRP, coherent joint transmission, CJT, different beam selections in each panel of a type II multiple panel codebook;
applying inter-panel co-phasing, and/or applying different amplitude and phase shift coefficients to selected beams in each of the multiple panels; and
performing the beam selections by selecting a set of beam groups based on a use of same beams for different polarization transmissions and transmission layers.

6. The method of claim 5, further comprising:
identifying a strongest beam from all beam groups across the different polarization transmissions, transmission layers, and the multiple panels.

7. The method of claim 6, further comprising:
reporting phase shifts of different beams relative to the identified strongest beam and wideband and sub-band amplitude coefficients applied to a corresponding beam relative to the identified strongest beam.

8. The method of any one of claims 5 to 7,
wherein same beam sets across different panels are combined with the different amplitude and phase coefficients to generate a combined beam which is different per polarization, transmission layer, and panel.

9. The method of any one of claims 5 to 8,
wherein selected beam sets for each panel are reported to a base station using an indicator identifying a beam combination among all possible combinations of beams.

10. A user equipment, UE, comprising:

at least one processor; and
at least one memory operatively connected with the at least one processor, the at least one memory storing instructions, which when executed, instruct the at least one processor to perform the method of any one of claims 5 to 9.

100

101

102

103

FIG. 1

200

201

202

203

204

FIG. 2

300

301

303

302

304

FIG. 3

FIG. 4